# EUROPÄISCHE PATENTSCHRIFT

(11) **EP 3 319 006 B1**
(45) Veröffentlichungstag und Bekanntmachung des Hinweises auf die Patenterteilung: **07.06.2023**
(21) Anmeldenummer: 17199554.1
(22) Anmeldetag: 01.11.2017
(51) Int. Cl.: H04L 9/32, G06F 21/64, G06F 21/33, H04L 9/00

(54) **VERFAHREN ZUR OFFLINE-ECHTHEITSPRÜFUNG EINES VIRTUELLEN DOKUMENTS**
METHOD FOR OFFLINE AUTHENTICITY TESTING OF A VIRTUAL DOCUMENT
PROCÉDÉ DE CONTRÔLE D'AUTHENTICITÉ HORS LIGNE D'UN DOCUMENT VIRTUEL

(30) Priorität: 04.11.2016 DE 102016221700
(43) Veröffentlichungstag der Anmeldung: 09.05.2018
(73) Patentinhaber: Bundesdruckerei GmbH, 10969 Berlin (DE)
(72) Erfinder: FRITZE, Frank, 12437 Berlin (DE); DIETRICH, Frank, 12437 Berlin (DE)
(74) Vertreter: Richardt Patentanwälte PartG mbB

(56) Entgegenhaltungen:
- WO-A1-2016/128569
- US-A1- 2010 088 233
- US-A1- 2011 307 703
- US-A1- 2015 095 999
- US-A1- 2016 283 920

## Beschreibung

Die Erfindung betrifft ein Verfahren zur Offline-Echtheitsprüfung eines virtuellen Dokuments sowie ein System zur Ausführung des Verfahrens.

Eine Echtheitsprüfung eines elektronischen Dokuments, insbesondere eines hoheitlichen Ausweisdokuments wie etwa eines elektronischen Personalausweises oder eines elektronischen Reisepasses, erfolgt üblicher Weise mittels zentraler Serversysteme die über eine Internetverbindung erreichbar sind.

Eine Onlineverbindung zu solchen zentralen Serversystemen ist jedoch nicht immer gegeben. Insbesondere bei einer Echtheitsprüfung mittels mobiler Geräte, wie sie etwa bei einer Verkehrskontrolle notwendig ist, kann es zu Störungen oder gar einem völligen Fehlen einer Verbindung zu einem entsprechenden mobilen Netzwerk kommen.

Ferner erfordert ein Austausch persönlicher Daten über ein mobiles Netzwerk neben der grundlegenden Hardware zum mobilen Datenaustausch effiziente Sicherheitsmaßnahmen zur Sicherung der übertragenen Daten gegen Ausspäh- oder Manipulationsversuche unberechtigter Dritter.

Ferner ist es bei elektronischen Dokumenten mit hohen Anforderungen an deren Authentizitätssicherung, wie etwa bei hoheitlichen Ausweisdokuments, üblich diese Dokumente als eigenständige physische Körper mit entsprechender Elektronik zum Auslesen von Daten bereitzustellen. Dies macht es jedoch notwendig, dass man unter Umständen eine Vielzahl unterschiedlicher physischer Dokumente mit sich führen muss. Eine solche Vielzahl physischer Dokumente ist aber zum einen unhandlich und zum anderen besteht eine hohe Wahrscheinlichkeit, dass zumindest einzelne Dokumente zu Hause liegengelassen werden und damit nicht zur Hand sind, wenn man sie benötigt.

Die US 2015/095999 A1 beschreibt ein elektronisches Berechtigungsnachweissystem, welches eine Interaktion von Geräten zur persönlichen Identifikation ermöglicht. Jedes interagierende Gerät verfügt über eine installierte Identitäts-Engine, die elektronische Berechtigungsnachweisinformationen erfasst, speichert, ausgibt und verwendet. Diese elektronischen Berechtigungsnachweisinformationen können auf Geräten zur persönlichen Identifikation installiert werden, wie Smartphones, Tablets, Laptops, eingebetteten Systemen und/oder Personal Computer.

Die US 2011/307703 A1 beschreibt ein Online-Drucksystem für werttragende Objekte (VBI/engl.: Value bearing items), welches ein oder mehrere kryptografische Module und eine zentrale Datenbank umfasst. Die kryptografischen Module sind in der Lage, die Geräteleistungskriterien des USPS Programms für informationsbasierte Indizes zur Sicherheit von Postsendungen und andere erforderliche VBI-Standards zu implementieren. Die Module verschlüsseln die in der zentralen Datenbank gespeicherten Informationen für alle Online-VBI-Systemkunden und können den Zugriff auf die Datenbank durch nicht autorisierte Nutzer verhindern.

Die US 2010/088233 A1 beschreibt ein eVault-System, welches personenbezogene Daten und Dokumente für Bürger sicher speichert und einen kontrollierten Zugriff durch Bürger und optional durch Dienstleister ermöglicht. Der eVault kann so angepasst werden, dass Prozesse mit den Dokumenten sicher und papierlos ausgeführt werden können. Die Dokumente sind zertifiziert, und für die Sicherheit wird ein biometrisches Matching verwendet. Beim Ausführen eines Matchings mit einer biometrischen Kennung, die von einem Benutzer präsentiert wird, wird dem Benutzer erlaubt, auf seinen persönlichen eVault zuzugreifen und auf einen darin gespeicherten persönlichen kryptographischen Schlüssel zuzugreifen. Einer oder mehrere dieser persönlichen Schlüssel können sicher innerhalb des eVault angewendet werden, um neben anderen Funktionen eine elektronische Signatur zu erzeugen.

Die WO 2016/128569 A1 beschreibt ein Verfahren eines digitalen Identitätssystems, das einen Freigabetoken zum Authentifizieren eines Trägers gegenüber einem Validierer erzeugt, wobei ein Datenspeicher des digitalen Identitätssystems eine Vielzahl von Attributen des Trägers umfasst, wobei das Verfahren ein Implementieren der folgenden Schritte durch das digitale Identitätssystem umfasst: Empfangen einer elektronischen Anforderung eines Freigabetokens durch das digitale Identitätssystem von einem Träger, wobei die Tokenanforderung mindestens eines der Trägerattribute in dem Datenspeicher identifiziert, welches zur Freigabe für einen Validierer ausgewählt ist; als Reaktion auf die elektronische Anforderung des Tokens, Erzeugen des Freigabetokens, welcher für diese Anfrage eindeutig ist, zur Präsentation durch den Träger gegenüber einem Validierer; Assoziieren des identifizierten mindestens einen Trägerattributs mit dem eindeutigen Freigabetoken in dem digitalen Identitätssystem; und Ausgeben des eindeutigen Freigabetokens an den Träger; und wobei eine spätere Präsentation des eindeutigen Freigabetokens gegenüber dem digitale Identifizierungssystem durch einen Validierer bewirkt, dass das mindestens eine Trägerattribut, welches mit dem Freigabetoken assoziiert ist, dem Validierer durch das digitale Identitätssystem verfügbar gemacht wird.

Die US 2016/0283920 A1 beschreibt ein Verfahren zum Authentifizieren einer Kontrollkette unter Verwendung von Blockchain-Technologie, wobei digitale Beweise oder andere digitale Inhalte erfasst und dann gehasht werden, um einen Hash-Fingerabdruck bzw. eine Hash-Signatur zu erzeugen. Der Hash-Fingerabdruck bzw. die Hash-Signatur wird unter Verwendung eines Blockchain-Netzwerkprotokolls sofort an die Blockchain gesendet, wodurch eine unmittelbar überprüfbare Kontrollkette ohne menschliche Interaktion oder Erfordernis eines vertrauenswürdigen Dritten gebildet wird.

Der Erfindung liegt die Aufgabe zugrunde, ein einfaches, effizientes und sicheres Verfahren zur Offline-Echtheitsprüfung eines virtuellen Dokuments zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zur Offline-Echtheitsprüfung eines virtuellen Dokuments mittels eines ersten und eines zweiten elektronischen Geräts. Das erste elektronische Gerät umfasst einen ersten Speicher, in welchem das virtuelle Dokument und eine Speicher-ID des virtuellen Dokuments gespeichert sind.

Das zweite elektronische Gerät umfasst einen zweiten Speicher, in welchem eine kryptographisch gesicherte Datenbank gespeichert ist, welche Hashwerte von einer Mehrzahl von virtuellen Dokumenten umfasst. Die Speicher-ID des virtuellen Dokuments identifiziert einen Eintrag der Datenbank mit dem Hashwert des virtuellen Dokuments. Das Verfahren umfasst:
- Übertragen des virtuellen Dokuments zusammen mit der Speicher-ID von dem ersten elektronischen Gerät an das zweite elektronische Gerät,
- Berechnen eines Hashwerts des virtuellen Dokuments durch das zweite elektronische Gerät,
- Identifizieren des Datenbankeintrags mit dem Hashwert des virtuellen Dokuments durch das zweite elektronische Gerät unter Verwendung der Speicher-ID des virtuellen Dokuments,
- Vergleichen des berechneten Hashwerts mit dem in dem identifizierten Datenbankeintrag gespeicherten Hashwert des virtuellen Dokuments, wobei die Echtheit des virtuellen Dokuments bestätigt wird, falls beide Hashwerte übereinstimmen.

Ausführungsformen können den Vorteil haben, dass durch die Verwendung eines virtuellen Dokuments die Bindung an einen spezifischen physischen Dokumentenkörper entfällt. Die Authentizität und Gültigkeit des virtuellen Dokuments ist insbesondere unabhängig vom ersten elektronischen Gerät, auf welchem das virtuelle Dokument gespeichert ist. Bei dem ersten elektronischen Gerät kann es sich somit um ein beliebiges, vorzugsweise mobiles, elektronisches Gerät mit einem Speicher zum Speichern eines virtuellen Dokuments in Form einer digitalen Datei sowie einer Schnittstelle zur Kommunikation mit dem zweiten elektronischen Gerät handeln. Die Echtheit des virtuellen Dokuments ergibt sich alleine aus der Übereinstimmung seines Hashwerts mit dem in der Datenbank als authentisch hinterlegten Hashwert. Somit ist es nach Ausführungsformen möglich eine Mehrzahl von Dokumenten in virtueller Form auf dem ersten elektronischen Gerät zu speichern. Bei dem ersten elektronischen Gerät kann es sich insbesondere um ein handliches, tragbares Gerät, wie etwa ein Smartphone handeln, welches ein Nutzer im Allgemeinen stets mit sich führt.

Ausführungsformen können den Vorteil haben, dass das zweite elektronische Gerät keine Onlineverbindung zu einem entfernten zentralen Serversystem zur Prüfung der Echtheit des virtuellen Dokuments benötigt. Die Echtheitsprüfung erfolgt vielmehr unter Verwendung der lokal auf dem zweiten elektronischen Gerät gespeicherten Datenbank. Da die Datenbank zur Echtheitsprüfung virtueller Dokument nur deren als authentisch anerkannten Hashwerte umfasst, kann die Datenbank selbst im Falle einer großen Anzahl virtueller Dokumente eine kompakte Größe aufweisen, sodass nach Ausführungsformen weder spezielle Speichermedien zum Speichern großer Datenmengen noch aufwendige Datenbanksoftwarelösungen zur effizienten Handhabung großer Datenbanken notwendig sind.

Da in der Datenbank nur Hashwerte der virtuellen Dokumente gespeichert sind, lassen sich der Datenbank keine in den Dokumenten enthaltenen Informationen entnehmen. Insbesondere können den Hashwerten keine Informationen entnommen werden, welche die Inhaber der entsprechenden virtuellen Dokumente identifizierend könnten. Somit ist es sicher, die Datenbank auf dem zweiten elektronischen Gerät zu speichern. Hierbei kann das zweite elektronische Gerät ebenfalls als mobiles Gerät ausgestaltet sein. Kein hochgesichertes zentrales Serversystem ist zum Schutz der Integrität der von den virtuellen Dokumenten umfassten Daten notwendig. Bereits die kryptographische Sicherung der Datenbank durch die Speicherung von Informationen in Form von Hashwerten kann ein hohes Maß an Sicherheit gewährleisten. Darüber hinaus ist es möglich, dass es sich bei der Datenbank um eine öffentliche Datenbank handelt, auf welche jedermann zugreifen kann.

Ausführungsformen können den Vorteil haben, dass allein der Besitzer des virtuellen Dokuments, genauer gesagt der Besitzer des ersten elektronischen Geräts, über das virtuelle Dokument verfügt. Der Besitzer hat somit die volle Verfügungshoheit über die in dem virtuellen Dokument enthaltenen Daten inne. Allein der Besitzer entscheidet, wem er das virtuelle Dokument mittels des zuvor beschriebenen Verfahrens zugänglich macht.

Bei dem ersten elektronischen Gerät handelt es sich vorzugsweise um ein tragbares elektronisches Gerät. Bei dem zweiten elektronischen Gerät handelt es sich um ein stationäres oder mobiles, insbesondere ein tragbares, Gerät.

Das erste und zweite elektronische Gerät sind jeweils informationstechnisch aufgerüstete und dazu konfiguriert selbst Informationen zu verarbeiten. Insbesondere handelt es sich um Computersysteme. Entsprechende Computersystemen können als stationäre oder mobile, insbesondere tragbare, Computersysteme konfiguriert sein.

Bei einem solchen Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um ein stationäres Computersystem, wie beispielsweise einen Personalcomputer oder einen in einer Client-Server-Umgebung eingebundenen Server handeln.

Ein Computer bzw. Computersystem kann eine Schnittstelle zur Verbindung mit einem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einer "Datenbank" wird hier allgemein eine Zusammenstellung von Daten in Form von Datenbankeinträgen gemäß einer festgelegten Organisationsstruktur der Datenbank verstanden. Eine Datenbank kann zudem ein Verwaltungsprogramm zum Verwalten der Datenbank umfassen. Unter einer kryptographisch gesicherten Datenbank wird eine Datenbank verstanden, deren Einträge kryptographisch gesichert sind. Beispielsweise umfasst die Datenbank verschlüsselte und/oder signierte Daten. Unter einer kryptographisch gesicherten Datenbank wird hier insbesondere eine Blockchain verstanden.

Unter einem "Zertifikat" wird hier ein digitales Zertifikat verstanden, welches auch als Public-Key-Zertifikat bezeichnet wird. Im Folgenden werden "digitale" Objekte auch als "virtuelle" Objekte bezeichnet, d.h. Datenkonstrukte zur elektronischen Datenverarbeitung. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptographischen Schlüsselpaares verschlüsselter Hashwert. Ein entsprechendes Verschlüsseln eines Hashwerts wird mithin als Signieren des Hashwerts bezeichnet. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit virtueller Dokumente sicherstellen und nachweisen, dass diese von einer bestimmten juristischen Person stammen.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung zwischen dem ID-Provider-Computersystem und dem Computersystem und/oder den Sensorgeräten oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann das ID-Provider-Computersystem ebenso wie das Computersystem und/oder Sensorgeräte eine Standardfunkschnittstelle zur Anbindung an ein WLAN aufweisen, an die das ID-Provider-Computersystem und/oder das Computersystem und/oder Sensorgeräte zur Herstellung einer lokalen Verbindung für die Übertragung des Authentifizierungstokens angeschlossen sein kann. Ferner kann es sich um ein öffentliches Netzwerk, wie beispielsweise das Internet handeln.

Eine Kommunikation kann über einen optischen Kanal zwischen zwei optischen Schnittstellen erfolgen. Bei den beiden optischen Schnittstellen kann es sich beispielsweise um ein Display zum Anzeigen bzw. Senden optischer Daten und eine Digitalkamera zur Aufnahme bzw. zum Empfang der optischen Daten handeln.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem Dokument um ein Machine-Readable Travel Document, wie beispielsweise von der Internationalen Luftfahrtbehörde (ICAO) und/oder dem BSI standardisiert, handeln.

Unter einem "virtuellen" Dokument wird ein Datenkonstrukt zur elektronischen Datenverarbeitung verstanden, welches dieselben Daten wie ein zuvor definiertes Dokument, jedoch keinen fest zugeordneten physischen Dokumentenkörper umfasst. Insbesondere ist die Gültigkeit eines solchen Dokuments unabhängig von dem Vorhandensein eines fest zugeordneten Dokumentenkörpers. Bei einem "virtuellen" Dokument kann es sich um eine elektronische Datei eines beliebigen Dateiformats handeln, insbesondere eine nicht ausführbare Text- oder Tabellendatei.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein "Sicherheitsmodul" stellt kryptographische Kernroutinen in Form von kryptographischen Programminstruktionen mit kryptographischen Algorithmen für Signaturerstellung und -prüfung, Schlüsselgenerierung, Schlüsselaushandlung, Verschlüsselung und Entschlüsselung von Daten sowie Zufallszahlengenerierung bereit und dient als sicherer Speicher für kryptographisches Schlüsselmaterial.

Bei dem Sicherheitsmodul kann es sich beispielsweise um einen geschützten Mikrocontroller handeln, d.h. einen Mikrocontroller mit physikalisch beschränkten Zugriffsmöglichkeiten. Zudem kann das Sicherheitsmodul zusätzliche Maßnahmen gegen Missbrauch aufweisen, insbesondere gegen unberechtigte Zugriffe auf Daten im Speicher des Sicherheitsmoduls. Beispielsweise umfasst ein Sicherheitsmodul Sensoren zur Überwachung des Zustands des Sicherheitsmoduls sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Temperatursensor, einen Spannungssensor, und/oder einen Lichtsensor. Taktfrequenzsensoren, Temperatursensoren und Spannungssensoren erfassen beispielweise Abweichungen der Taktfrequenz, Temperatur und/oder Spannung nach oben oder unten von einem vordefinierten Normalbereich. Insbesondere kann ein Sicherheitsmodul nichtflüchtige Speicher mit einem geschützten Speicherbereich umfassen.

Durch die Mittel zum Schutz gegen unbefugte Manipulationen wird durch technische Maßnahmen die Vertrauenswürdigkeit des Sicherheitsmoduls, das heißt seine Funktion als "Vertrauensanker", gewährleistet. Beispielsweise wird das Sicherheitsmodul von einer vertrauenswürdigen Institution, wie z.B. durch ein Trust-Center (Trust Service Provider), konfiguriert und mit dem benötigten kryptografischen Schlüsselmaterial versehen. Durch die Mittel zum Schutz gegen unbefugte Manipulationen kann sichergestellt werden, dass sicherheitsrelevante Funktionalitäten des Sicherheitsmoduls nicht modifiziert werden.

Beispielsweise sind zumindest Teile des Sicherheitsmoduls signiert, wie z.B. Programmkomponenten und/oder Hardwarekomponenten, die eine digitale Signatur tragen können. Insbesondere können das Betriebssystem, das Binary Input Output System (BIOS), eine Konfigurationsdatei und/oder ein Speicher des Sicherheitsmoduls digital signiert sein. Vor einer Nutzung des Sicherheitsmoduls wird geprüft, ob die Signatur bzw. die Signaturen, valide sind. Wenn eine der Signaturen nicht valide ist, wird die Nutzung des Sicherheitsmoduls und/oder des durch das Sicherheitsmodul gesicherten elektronischen Systems gesperrt.

Nach Ausführungsformen beinhalten die Mittel zum Schutz des Sicherheitsmoduls gegen unbefugte Manipulationen mechanische Mittel, die z.B. das Öffnen des Sicherheitsmoduls oder seiner Teile verhindern sollen, oder die bei dem Versuch eines Eingriffs in das Sicherheitsmodul dieses unbrauchbar machen, beispielsweise indem ein Datenverlust eintritt. Beispielsweise können hierzu sicherheitskritische Teile des Sicherheitsmoduls in Epoxidharz eingegossen sein, wobei ein Versuch, eine betreffende Komponente aus dem Epoxidharz zu entfernen, zu einer unvermeidlichen Zerstörung dieser Komponente führt.

Des Weiteren kann ein Sicherheitsmodul Mittel zur kryptographischen Datensicherung umfassen, insbesondere in dem geschützten Speicherbereich, wie beispielsweise einen Zufallszahlengenerator, einen Generator für kryptographische Schlüssel, einen Hashgenerator, ein Ver-/Entschlüsselungsmodul, ein Signaturmodul, Zertifikate, und/oder einen oder mehrere nicht migrierbare kryptographische Schlüssel.

Nach Ausführungsformen weisen das erste und/oder das zweite elektronische Gerät ein Sicherheitsmodul auf. Ausführungsformen können den Vorteil haben, dass das Sicherheitsmodul Mittel zur effizienten kryptographischen Datensicherung, insbesondere zur Sicherung der Datenübertragung zwischen den beiden elektronischen Geräten, bereitstellt.

Nach Ausführungsformen erfolgt die Übertragung des virtuellen Dokuments von dem ersten elektronischen Gerät an das zweite elektronische Gerät in verschlüsselter Form und das Verfahren umfasst dazu ferner:
- Übertragen eines kryptographischen Schlüssels des zweiten elektronischen Geräts von dem zweiten elektronischen Gerät an das erste elektronische Gerät,
- Verschlüsseln des virtuellen Dokuments durch das erste Gerät mit dem kryptographischen Schlüssel des zweiten Geräts vor der Übertragung an das zweite elektronische Gerät,
- Entschlüsseln des verschlüsselten virtuellen Dokuments durch das zweite elektronische Gerät nach der Übertragung.

Ausführungsformen können den Vorteil haben, dass durch die verschlüsselte Übertragung des virtuellen Dokuments effektiv verhindert werden kann, dass unbefugte Dritte den Datenaustausch ausspähen können. Insbesondere kann vermieden werden, dass ein unbefugter Dritter das virtuellen Dokument abfängt und missbräuchlich verwendet.

Nach Ausführungsformen umfasst die Übertragung des virtuellen Dokuments von dem ersten elektronischen Gerät an das zweite elektronische Gerät ferner eine Signatur mit einem privaten kryptographischen Schlüssel eines einem Inhaber des virtuellen Dokuments zugeordneten asymmetrischen Schlüsselpaars, wobei die kryptographisch gesicherte Datenbank eines öffentlichen kryptographischen Schlüssels des dem Inhaber zugeordneten asymmetrischen Schlüsselpaars umfasst. Das Verfahren umfasst dazu ferner:
- Berechnen eines Hashwerts aus dem virtuellen Dokument und einer Kennung, welche die Übertragung des virtuellen Dokuments von dem ersten elektronischen Gerät an das zweite elektronische Gerät identifiziert,
- Signieren des Hashwerts mit dem privaten kryptographischen Schlüssel des Inhabers des virtuellen Dokuments vor der Übertragung an das zweite elektronische Gerät,
- Überprüfen der Signatur durch das zweite elektronische Gerät nach der Übertragung unter Verwendung des von der kryptographisch gesicherten Datenbank umfassten öffentlichen kryptographischen Schlüssels des Inhabers.

Ausführungsformen können den Vorteil haben, dass anhand der Signatur des Hashwerts mit dem privaten kryptographischen Schlüssel des Inhabers des virtuellen Dokuments unter Verwendung des von der Datenbank bereitgestellten öffentlichen kryptographischen Schlüssels des Inhabers von dem zweiten elektronischen Gerät geprüft werden kann, ob der Sender des virtuellen Dokuments auch tatsächlich dessen Inhaber und zu dessen Nutzung berechtigt ist.

Die Kennung ist dabei ein Datensatz, welcher dazu geeignet ist eine individuelle Übertragung des virtuellen Dokuments von dem ersten elektronischen Gerät an das zweite elektronische Gerät zu identifizieren.

Bei einer gesicherten Aufbewahrung des privaten kryptographischen Schlüssels des Inhabers des virtuellen Dokuments, wie etwa in einem geschützten Speicherbereich des ersten elektronischen Geräts, verfügt allein der Inhaber des virtuellen Dokuments, der zugleich Besitzer des ersten elektronischen Geräts sein sollte, über den entsprechenden privaten kryptographischen Schlüssel. Somit kann sichergestellt werden, dass eine bestimmte Übertragung des virtuellen Dokuments mit Wissen und Einverständnis des Inhabers des entsprechenden virtuellen Dokuments erfolgt. Dieses Wissen und Einverständnis wird durch die Signatur mit dem entsprechenden privaten kryptographischen Schlüssel bestätigt. Die Authentizität der Signatur wird wiederum durch den in der Datenbank hinterlegten öffentlichen kryptographischen Schlüssel gewährleistet, welcher dem privaten kryptographischen Schlüssel des Inhabers zugeordnet ist. Wenn die Prüfung der Signatur mit dem der Datenbank entnommen öffentlichen kryptographischen Schlüssel erfolgreich ist, wird die Signatur und damit die vorliegende Verwendung des virtuellen Dokuments als zulässig anerkannt.

Nach Ausführungsformen umfasst das virtuelle Dokument den öffentlichen kryptographischen Schlüssel des dem Inhaber des virtuellen Dokuments zugeordneten asymmetrischen Schlüsselpaars. Nach Ausführungsformen umfasst die Datenbank den öffentlichen kryptographischen Schlüssel des Inhabers des virtuellen Dokuments. Beispielsweise kann die Datenbank einen weiteren mit dem privaten kryptographischen Schlüssel des Ausstellers signierten Eintrag umfassen, in welchem der öffentlichen kryptographischen Schlüssel des Inhabers des virtuellen Dokuments hinterlegt ist. Beispielsweise kann die Datenbank den öffentlichen kryptographischen Schlüssel des Inhabers des virtuellen Dokuments als eine Adresse umfassen, welcher das virtuelle Dokument zugeordnet ist. Nach Ausführungsformen umfasst die Datenbank ein Zertifikat, welches dem asymmetrischen Schlüsselpaar des Inhabers des virtuellen Dokuments zugeordnet ist, den öffentlichen kryptographischen Schlüssel des Inhabers umfasst und dessen Authentizität bestätigt. Nach Ausführungsformen wird die Authentizität des entsprechenden Zertifikats durch eine PKI belegt, welche beispielsweise von der Datenbank umfasst ist.

Nach Ausführungsformen umfasst die Kennung einen öffentlichen Schlüssel eines dem zweiten elektronischen Gerät zugeordneten asymmetrischen Schlüsselpaars. Ausführungsformen können den Vorteil haben, dass aus der Kennung somit ersichtlich ist, dass das virtuelle Dokument an das zweite elektronische Gerät adressiert ist. Alternative oder zusätzlich kann die Kennung auch ein Datum, eine Zeitangabe, eine Ortsangabe, eine Kennnummer, wie etwa eine Kennnummer der Übertragung, des ersten und/oder des zweiten elektronischen Geräts, ein Passwort, einen symmetrischen kryptographischen Schlüssel und/oder eine Angabe zu einem Verwendungszweck umfassen. Ausführungsformen können den Vorteil haben, dass das virtuelle Dokument anhand der Kennung einer bestimmten Übertragung zugeordnet wird.

Da der signierte Hashwert aus dem virtuellen Dokument und einer Kennung berechnet wird, kann anhand der Kennung geprüft werden, ob das entsprechende virtuellen Dokument auch tatsächlich von seinem Inhaber für die konkrete Übertragung und damit einen bestimmten Verwendungszweck freigegeben wurde.

Somit kann beispielsweise verhindert werden, dass der Empfänger des virtuellen Dokuments, z.B. der Besitzer des zweiten elektronischen Geräts, das empfangene virtuelle Dokument missbräuchlich, d.h. ohne Einverständnis des Inhabers, verwendet. Beispielsweise könnte der Besitzer des zweiten elektronischen Geräts behaupten, er handle im Namen des Inhabers des virtuellen Dokuments und als Nachweis das virtuellen Dokument vorweist. Ebenso wäre es möglich, dass der Besitzer des zweiten elektronischen Geräts versucht sich unter Verwendung des virtuellen Dokuments als dessen Inhaber auszugeben. All diese Versuche können effektiv unterbunden durch die Zuordnung zu einer bestimmten Übertragung mittel der Kennung, die durch die Signatur kryptographisch gesichert wird.

Nach Ausführungsformen wird der signierte Hashwert aus dem virtuellen Dokument und der Kennung zusammen mit dem virtuellen Dokument durch das erste Gerät mit dem kryptographischen Schlüssel des zweiten Geräts verschlüsselt und in verschlüsselter Form an das zweite Gerät gesendet, welches den verschlüsselten Datensatz mithilfe seines privaten Schlüssels entschlüsseln kann.

Nach Ausführungsformen ist der in der Datenbank gespeicherte Hashwert des virtuellen Dokuments mit einem privaten Schlüssel eines einem Aussteller des virtuellen Dokuments zugeordneten asymmetrischen Schlüsselpaars signiert. Das Verfahren umfasst ferner: Überprüfen der Signatur des in dem identifizierten Datenbankeintrag gespeicherten Hashwerts durch das zweite elektronische Gerät unter Verwendung eines öffentlichen kryptographischen Schlüssels des dem Aussteller zugeordneten asymmetrischen Schlüsselpaars. Ausführungsformen können den Vorteil haben, dass die Authentizität des Datenbankeintrags gesichert ist. Anhand der Signatur kann geprüft werden, dass der Hashwert, welcher die Grundlage für die Bestätigung der Echtheit des virtuellen Dokuments bildet, von einer dazu berechtigten und vertrauenswürdigen Instanz eingetragen wurde.

Nach Ausführungsformen umfasst die Datenbank zusätzlich den öffentlichen kryptographischen Schlüssel des Ausstellers. Ausführungsformen können den Vorteil haben, dass somit auch im Offline-Modus des zweiten elektronischen Geräts ein Zugriff auf den öffentlichen kryptographischen Schlüssel des Ausstellers ermöglicht wird. Handelt es sich bei der Datenbank zudem um eine Datenbank mit einer Blockchain-Struktur, wobei der öffentliche kryptographische Schlüssel des Ausstellers in einer der Transaktionen gespeichert ist, so wird der öffentliche kryptographische Schlüssel durch die mittels der Prüfsummenspeicherung gesicherten Kettenstruktur der Blockchain vor Manipulationen geschützt.

Nach Ausführungsformen umfasst der Datenbankeintrag zusätzlich den öffentlichen kryptographischen Schlüssel des Ausstellers. Ausführungsformen können den Vorteil haben, dass sie einen einfachen Zugriff auf den öffentlichen kryptographischen Schlüssel ermöglichen. Beispielsweise kann der Datenbankeintrag den öffentlichen kryptographischen Schlüssel des Ausstellers als eine Adresse umfassen, welcher das virtuelle Dokument zugeordnet ist. Nach Ausführungsformen umfasst der Datenbankeintrag ein dem asymmetrischen Schlüsselpaar des Ausstellers zugeordnetes Zertifikat, welches den öffentlichen kryptographischen Schlüssel des Ausstellers umfasst und dessen Authentizität bestätigt. Nach Ausführungsformen wird die Authentizität des entsprechenden Zertifikats durch eine PKI belegt, welche beispielsweise von der Datenbank bereitgestellt wird.

Nach Ausführungsformen wird die Speicher-ID zusammen mit dem virtuellen Dokument durch das erste Gerät mit dem kryptographischen Schlüssel des zweiten Geräts verschlüsselt. Ausführungsformen können den Vorteil haben, dass sie die Sicherheit weiter erhöhen.

Nach Ausführungsformen umfasst das virtuelle Dokument selbst die Speicher-ID. Ausführungsformen können den Vorteil haben, dass sie ein einfaches Auffinden der Speicher-ID und damit des Datenbankeintrags sicherstellen.

Nach Ausführungsformen ist das virtuelle Dokument in einem geschützten Speicherbereich des ersten Speichers gespeichert. Ausführungsformen können den Vorteil haben, dass das virtuelle Dokument und insbesondere die darin enthaltenen Daten effektiv gegen unerlaubte Zugriffe geschützt werden können und der Besitzer des ersten elektronischen Geräts sich die Verfügungshoheit über das virtuelle Dokument sichern kann.

Nach Ausführungsformen handelt es sich bei der kryptographisch gesicherten Datenbank um eine Blockchain und der Hashwert des virtuellen Dokuments ist als Transaktion in einem Block der Blockchain gespeichert.

Unter einer "Blockchain" wird hier und im Folgenden eine geordnete Datenstruktur verstanden, wobei jeder Block der Blockchain durch einen Hash-Wert identifiziert wird und einen Vorgängerblock in der Blockchain referenziert, für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die Blockchain besteht aus einer Reihe von Datenblöcken, in denen jeweils eine oder mehrere Transaktionen zusammengefasst und mit einer Prüfsumme in Form eines Hashwerts versehen sind. Neue Blöcke der Blockchain werden in einem üblicher Weise rechenintensiven Prozess erzeugt, der auch als sogenanntes Mining bezeichnet wird. Diese neu erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Haschwerten, des vorangehenden Blocks im jeweils nachfolgenden Block ein hohes Maß an Sicherheit gegenüber nachträglichen Manipulationen bietet. Bei einer Blockchain werden die Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme im Header des Blocks vermerkt. Das Verketten der Blöcke kann dann unter Verwendung dieser Root-Hashwerte. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner von diesen umfasst und über den Root-Hashwert gesicherten Transaktionen praktisch ausgeschlossen ist, da hierfür die Hashwerte aller nachfolgenden Blöcke in kurzer Zeit ebenfalls neu berechnet werden müssten.

Der erste Block in der Blockkette ist vorgegeben und wird Genesisblock genannt. Nach Ausführungsformen sind die öffentlichen kryptographischen Schlüssel eines oder mehrerer Aussteller der virtuellen Dokumente, deren Hashwerte in den Transaktionen gespeichert sind in dem Genesisblock gespeichert. Der Genesisblock ist aufgrund der zuvor beschriebenen Kettenstruktur, derjenige Block, dessen Einträge das höchste Maß an Sicherheit aufweisen, da zu seiner Änderung die gesamte Blockchain durch eine neue Blockchain ersetzt werden müsste. Mithin kann der Eintrag des öffentlichen kryptographischen Schlüssels in den Genesisblock einen Vertrauensanker mit einem ausreichenden Maß an Sicherheit darstellen, sodass beispielsweise keine zusätzliche PKI-Prüfung notwendig ist, um der Authentizität des öffentlichen kryptographischen Schlüssels zu vertrauen. Dadurch kann die Sicherheit des Systems im Offline Modus weiter erhöht werden. Nach weiteren Ausführungsformen kann der Genesisblock die PKI des öffentlichen kryptographischen Schlüssels enthalten.

Zudem kann durch eine Anpassung der notwendigen Rechenintensität für die Erstellung jeweils neuer Blöcke die Sicherheit zusätzlich erhöht werden. Die für die Erstellung neuer Blöcke notwenige Rechenintensität lässt sich über Anforderungen an den Hashwert des zu erstellenden neuen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen neuen Blocks notwendig ist. Der Hashwert eines Blocks lässt sich beispielsweise durch Hinzufügen und Variieren eines Nounce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer ausreichend rechenintensiven Generierung neuer Blöcke aus. Bekannte Ausführungsformen einer Blockchain, wie etwa im Fall der Kryptowährung Bitcoin, basieren auf einer Anonymität der an den Transaktionen beteiligten Partner. Demgegenüber kann durch oben beschriebene Signatur der in die Transaktionen eingetragenen Hashwerte, deren Authentizität belegt und ihr Ursprung nachgewiesen werden. Hierdurch kann die Fälschungssicherheit verbessert werden.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus einen bestimmten Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. target) ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1)·2²⁰⁸]/ 2²⁵⁶ ≈ 2⁻³². Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Blockchainservern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Werden gültige Blöcke durch ein rechenintensive Verfahren, wie das zuvor Beschriebene erzeugt, so vertrauen die Teilnehmer des Blockchain-Netzwerks der längsten gültigen Blockchain, da hinter dieser die meiste Rechenleistung steht und somit angenommen werden kann, dass diese von der Mehrheit der Teilnehmer als gültig anerkannt wird. Kommt es beispielsweise dazu, dass ein Fork, d.h. eine Verzweigung, in der Blockchain entsteht, setzt sich irgendwann der Fork mit der größeren Kettenlänge durch, da anzunehmen ist, dass hinter diesem die Mehrheit der Teilnehmer steht.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählte Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann neue Einträge vorschlagen, die in einen neuen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen neuen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc, 2014, https://ripple.com/files/ripple_consensus_whitepaper.pdf).

Beispielsweise kann es sich bei der Blockchain um eine private oder öffentliche Blockchain handeln. Beispielsweise handelt es sich um eine Bitcoin-, Litecoin- oder Ethereum-Blockchain.

Ferner können Ausführungsformen den Vorteil haben, dass die Blockchain darauf ausgelegt ist als dezentralen Datenbank in einem dezentralen Netzwerk implementiert zu werden, wobei sie redundant und dezentral auf allen Knoten des entsprechenden Netzwerks gespeichert wird. Beispielsweise handelt es sich bei dem zweiten elektronischen Gerät um ein solchen Knoten eines dezentralen Netzwerks. Wird die Verbindung eines Knotens zum Rest des Netzwerks unterbrochen, so steht diesem nach wie vor die vollständige Blockchain zur Verfügung. Selbst wenn die Unterbrechung längere Zeit andauern sollte, so steht dem Knoten dennoch die vollständige Blockchain bis zu der Unterbrechung zur Verfügung und allenfalls neuste Einträge, welche nach diesem Zeitpunkt erfolgt sind fehlen. Somit kann die Blockchain auch im Offline-Betrieb einen effizienten Zugriff auf die in ihr enthaltenen Daten sicherstellen. Durch ein regelmäßiges Update der Blockchain im Speicher des zweiten elektronischen Geräts kann zudem sichergestellt werden, dass die Blockchain im Offlinebetrieb zwischen den Updates auf einem ausreichend aktuellen Stand ist. Handelt es sich bei dem zu prüfenden Dokument um einen Führerschein und wird die Blockchain beispielsweise alle 24 Stunden aktualisiert, wären allenfalls die innerhalb der letzten 24 Stunden ausgestellten Dokument noch nicht in der Blockchain des zweiten elektronischen Geräts erfasst.

Nach Ausführungsformen wird die kryptographisch gesicherte Datenbank auf dem zweiten elektronischen Gerät in einem regelmäßigen Intervall geupdated, wobei das virtuelle Dokument eine Angabe umfasst, welche den Beginn seiner Gültigkeit definiert und der Beginn der Gültigkeit so gewählt ist, dass die Zeitdifferenz zwischen der Eintragung des Hashwerts des virtuellen Dokuments in die Blockchain und dem Beginn der Gültigkeit größer als das Updateintervall ist. Ausführungsformen können den Vorteil haben, dass die auf dem zweiten elektronischen Gerät gespeicherte Blockchain stets die Hashwerte aller gültigen virtuellen Dokumente umfasst.

Nach Ausführungsformen handelt es sich bei der Speicher-ID um eine Transaktions-ID der Transaktion, welche den signierten Hashwert des virtuellen Dokuments umfasst. Ausführungsformen können den Vorteil haben, dass sie eine einfache Identifizierung der Transaktion ermöglichen, welche den Hashwert des zu prüfenden virtuellen Dokuments umfasst.

Nach Ausführungsformen umfasst das virtuelle Dokument einen öffentlichen kryptographischen Schlüssel eines dem Inhaber des virtuellen Dokuments zugeordneten asymmetrischen Schlüsselpaars. Ausführungsformen können den Vorteil haben, dass somit die Authentizität des öffentlichen Schlüssels und dessen Zuordnung zu dem Inhaber des virtuellen Dokuments durch das virtuelle Dokument selbst bzw. den Aussteller des virtuellen Dokuments bestätigt wird. Ausführungsformen können den Vorteil haben, dass durch das virtuelle Dokument die Authentizität des entsprechenden öffentlichen Schlüssels bestätigt wird. Beispielsweise wird der öffentliche kryptographische Schlüssel des Inhabers bzw. zukünftigen Inhabers durch den Aussteller des virtuellen Dokuments geprüft. Beispielsweise wird die Authentizität des öffentlichen kryptographischen Schlüssels unter Verwendung eines Zertifikats, insbesondere eines Zertifikats einer PKI, überprüft. Somit bestätigt der Aussteller des virtuellen Dokuments durch die Aufnahme des öffentlichen kryptographischen Schlüssels in das virtuelle Dokument dessen Authentizität. Mithin erfüllt das resultierende virtuelle Dokument also zudem die Funktion eines Zertifikats, welches die Authentizität des öffentlichen kryptographischen Schlüssels bestätigt und durch die Signatur mit dem privaten kryptographischen Schlüssel des Ausstellers vor Fälschungen schützt. Dabei kann es vorteilhaft sein, dass ein Nachweis der Authentizität des öffentlichen Schlüssels anhand der Datenbank mit dem signierten Hashwert des virtuellen Dokuments auch offline möglich ist, solange die Datenbank zur Verfügung steht. Dies kann beispielsweise bei einer Blockchain der Fall sein.

Bei dem Inhaber des virtuellen Dokuments handelt es sich beispielsweise um den Besitzer des Dokuments, welcher anhand des Dokuments als Inhaber des Dokuments und damit auch als Inhaber des zu erstellenden virtuellen Dokuments authentifiziert wurde.

Nach Ausführungsformen umfasst die Datenbank den öffentlichen kryptographischen Schlüssel des Inhabers des virtuellen Dokuments zusätzlich zu dem entsprechenden Dokument. Beispielsweise kann die Datenbank einen weiteren mit dem privaten kryptographischen Schlüssel des Ausstellers signierten Eintrag umfassen, in welchem der öffentlichen kryptographischen Schlüssel des Inhabers des virtuellen Dokuments hinterlegt ist. Beispielsweise kann die Datenbank den öffentlichen kryptographischen Schlüssel des Inhabers des virtuellen Dokuments als eine Adresse umfassen, welcher das virtuelle Dokument zugeordnet ist. Nach Ausführungsformen kann die Datenbank ein Zertifikat umfassen, welches dem asymmetrischen Schlüsselpaar des Inhabers des virtuellen Dokuments zugeordnet ist, den öffentlichen kryptographischen Schlüssel des Inhabers umfasst und dessen Authentizität bestätigt. Nach Ausführungsformen wird die Authentizität des entsprechenden Zertifikats durch eine PKI belegt, welche beispielsweise von der Datenbank umfasst ist.

Nach Ausführungsformen umfasst das erste elektronische Gerät ein erstes Display und eine erste Digitalkamera. Das zweite elektronische Gerät umfasst ein zweites Display und eine zweite Digitalkamera. Das Übertragen des verschlüsselten virtuellen Dokuments umfasst:
- Anzeigen des verschlüsselten virtuellen Dokuments auf dem ersten Display,
- Aufnehmen des dargestellten verschlüsselten virtuellen Dokuments mit der zweiten Digitalkamera.

Ausführungsformen können den Vorteil haben, dass die Übertragung des verschlüsselten virtuellen Dokuments über einen optischen Kanal erfolgt. Bei den hierfür notwendigen Schnittstellen, d.h. Display und Digitalkamera, handelt es sich um Standardhardware, welche mittlerweile beispielsweise in allen Smartphones verfügbar ist. Ausführungsformen können zudem den Vorteil haben, dass eine gerichtet Übertragung mittels des Displays durch ein entsprechendes Ausrichten des Displays besser gegenüber Ausspähversuchen Dritter gesichert werden kann, als beispielsweise eine ungerichtete Übertragung mittels RFID oder Bluetooth.

Nach Ausführungsformen wird das verschlüsselte virtuelle Dokument auf dem ersten Display als zeitlich kodierter graphischer Code in Form eines Videostreams angezeigt. Ausführungsformen können den Vorteil haben, dass auch größere Datenmenge übertragen werden können. Dies mag etwa erforderlich sein, wenn das zu übertragende virtuelle Dokument ein Foto des Dokumenteninhabers umfasst. Insbesondere können Datenmengen übertragen werden, welche die Kapazität üblicher zweidimensionaler graphischer Codes, wie etwa von QR-Codes, übersteigen. Dies wird durch die zusätzliche Dimension der Kodierung, d.h. die zeitliche Abfolge einer Mehrzahl zweidimensionaler graphischer Codes, erreicht. Diese zusätzliche Dimension der Kodierung ist insbesondere unabhängig von der Größe des zur Übertragung verwenden Displays. Somit kann beispielsweise durch eine Erhöhung der Anzahl zweidimensionaler graphischer Codebilder in der zeitlichen Abfolge eine aufgrund einer beschränkten Bildschirmgröße reduzierten Größe der einzelnen zweidimensionalen graphischen Codebilder des Videostreams kompensiert werden. Nach Ausführungsbeispielen wird der Videostream in einer Endlosschleife angezeigt. Ausführungsformen können den Vorteil haben, dass sie ein vollständiges Erfassen der übertragenen Daten auch ohne aufwendige Abstimmung vom Beginn der Darstellung auf dem ersten Display und dem Beginn der Aufnahme mittels der zweiten Digitalkamera notwendig machen.

Nach Ausführungsformen handelt es sich bei dem zeitlich kodierten graphischen Code um einen QR-Codestream. Ausführungsformen können den Vorteil haben, dass es sich bei den einzelnen Bildern des Videostreams jeweils um einen QR-code handelt. Somit kann eine effiziente und sichere Datenübertragung ermöglicht werden.

Nach Ausführungsformen umfasst das Übertragen des dem zweiten elektronischen Gerät zugeordneten kryptographischen Schlüssels:
- Anzeigen des kryptographischen Schlüssels auf dem zweiten Display,
- Aufnehmen des dargestellten kryptographischen Schlüssels mit der ersten Digitalkamera.

Ausführungsformen können den Vorteil haben, dass das sie eine sichere und effiziente Übertragung des kryptographischen Schlüssels auf Basis von Standardhardware ermöglichen.

Nach Ausführungsformen wird der dem zweiten elektronischen Gerät zugeordnete kryptographische Schlüssel auf dem zweiten Display als graphischer Code angezeigt. Nach Ausführungsformen handelt es sich bei dem kodierten graphischen Code um einen QR-Code. Ausführungsformen können den Vorteil haben, dass sie eine sichere und effiziente Übertragung des kryptographischen Schlüssels ermöglichen. Der Schlüssel wird hierzu vor dem Senden von dem zweiten elektronischen Gerät graphisch kodiert und von dem empfangenden ersten elektronischen Gerät wieder dekodiert.

Nach Ausführungsformen handelt es sich bei dem kryptographischen Schlüssel des zweiten elektronischen Geräts um den öffentlichen Schlüssel des dem zweiten elektronischen Gerät zugeordneten asymmetrischen Schlüsselpaars und das Entschlüsseln des verschlüsselten virtuellen Dokuments erfolgt unter Verwendung eines privaten Schlüssels des asymmetrischen Schlüsselpaars, welcher in einem geschützten Speicherbereich des zweiten Speichers gespeichert ist. Ausführungsformen können den Vorteil haben, dass das sie eine sichere Schlüsselübertragung sowie Verschlüsselung des virtuellen Dokuments ermöglichen.

Nach Ausführungsformen handelt es sich bei dem kryptographischen Schlüssel des zweiten elektronischen Geräts um einen symmetrischen kryptographischen Schlüssel. Ausführungsformen können den Vorteil haben, dass sie eine schnelle Verschlüsselung und Entschlüsselung des virtuellen Dokuments ermöglichen.

Nach Ausführungsformen handelt es sich bei dem ersten und/oder zweiten elektronischen Gerät um ein Mobilfunkgerät, insbesondere ein Smartphone. Ausführungsformen können den Vorteil haben, dass das Standardhardware zum implementieren des Verfahrens verwendet werden kann. Insbesondere können Ausführungsformen den Vorteil haben, dass Smartphones die für eine optische Übertragung notwendige Hardware, d.h. Display und Digitalkamera, standardmäßig umfassen.

Nach Ausführungsformen befindet sich das erste und/oder zweite elektronische Gerät in einem Offline-Modus. Ausführungsformen können den Vorteil haben, dass das Verfahren auch im Offline-Modus der Geräte ohne Internetverbindung oder ähnliches ausführbar ist.

Nach Ausführungsformen umfasst das virtuelle Dokument ein Ablaufdatum, welches ein Ende der Gültigkeit des virtuellen Dokuments festlegt. Ausführungsformen können den Vorteil haben, dass ein einmal in die kryptographisch gesicherte Datenbank eingetragenes virtuelles Dokument seine Gültigkeit nicht bis in alle Ewigkeit beibehält, da Einträge in eine Blockchain weder gelöscht noch geändert werden können. Insbesondere kann durch die Anforderung einer Neuaustellung des virtuellen Dokuments in regelmäßigen Abständen sichergestellt werden, dass dem Besitzer des ersten elektronischen Geräts bzw. dem Inhaber des virtuellen Dokuments nicht zwischenzeitlich die Berechtigung zur Verwendung des virtuellen Dokuments entzogen wurde.

Nach Ausführungsformen wird das virtuelle Dokument nach der Offline-Echtheitsprüfung automatisch von dem zweiten elektronischen Gerät gelöscht. Ausführungsformen können den Vorteil haben, dass sichergestellt werden kann, dass allein der Besitzer des ersten elektronischen Geräts die Verfügungshoheit über das virtuelle Dokument sowie der darin enthaltenen Daten besitzt. Insbesondere kann so sichergestellt werden, dass abgesehen von der Echtheitsprüfung außerhalb des ersten elektronischen Geräts allein der Hashwert des virtuellen Dokuments zur Verfügung steht. So erfolgen beispielsweise zunächst eine Echtheitsprüfung sowie eine Auswertung der von dem virtuellen Dokument umfassten Daten und anschließend wird das virtuelle Dokument gelöscht.

Ausführungsformen umfassen ferner ein System zur Offline-Echtheitsprüfung eines virtuellen Dokuments. Das System umfasst ein erstes und ein zweites elektronisches Gerät. Das erste elektronische Gerät umfasst einen ersten Speicher, in welchem das virtuelle Dokument und eine Speicher-ID des virtuellen Dokuments gespeichert sind. Das zweite elektronische Gerät umfasst einen zweiten Speicher, in welchem eine kryptographisch gesicherte Datenbank gespeichert ist, welche Hashwerte von einer Mehrzahl von virtuellen Dokumenten umfasst. Die Speicher-ID des virtuellen Dokuments identifiziert einen Eintrag der Datenbank mit dem Hashwert des virtuellen Dokuments. Das System ist dazu konfiguriert ein Verfahren nach einer der zuvor beschriebenen Ausführungsformen auszuführen.

Ausführungsformen umfassen ein Verfahren zum Ausstellen einer virtuellen Version eines Dokuments durch ein erstes Computersystem eines ID-Providers zur Offline-Echtheitsprüfung nach einer der Ausführungsformen des zuvor genannten Verfahrens. Das Dokument weist eine visuelle Widergabe eines Datensatzes auf. Das Verfahren umfasst:
- Erstellen des virtuellen Dokuments als virtueller Version des Dokuments, welches eine elektronische Kopie des Datensatzes des Dokuments umfasst,
- Berechnen eines Hashwerts des virtuellen Dokuments,
- Signieren des Hashwerts mit einem privaten Schlüssel eines dem Austeller des virtuellen Dokuments zugeordneten asymmetrischen Schlüsselpaars,
- Speichern des signierten Hashwerts in einem Eintrag in einer kryptographisch gesicherten Datenbank zur Ausstellung des virtuellen Dokuments,
- Senden des virtuellen Dokuments an einen Besitzer des Dokuments zusammen mit einer Speicher-ID des virtuellen Dokuments, wobei die Speicher-ID den Eintrag der Datenbank mit dem signierten Hashwert des virtuellen Dokuments identifiziert.

Ausführungsformen können den Vorteil haben, dass ein sicheres und effizientes Verfahren zum Ausstellen eines virtuellen Dokuments auf Basis eines physischen Dokuments bereitgestellt wird. Dabei umfasst das virtuelle Dokument den gleichen Datensatz wie das zugrundeliegende physische Dokument. Die Authentizität des entsprechenden Datensatzes und damit des virtuellen Dokuments wird durch das zuvor definierte Verfahren sichergestellt und beruht damit auf der Authentizität des zugrundeliegenden physischen Dokuments. Ist das virtuelle Dokument erst einmal erstellt und seine Authentizität von dem Computersystem des ID-Providers durch Eintrag in die kryptographisch gesicherte Datenbank bestätigt, so besitzt das virtuelle Dokument unabhängig von dem physischen Dokument Gültigkeit. Mit anderen Worten ist für eine Echtheitsprüfung des virtuellen Dokuments lediglich eine Prüfung des in der kryptographischen Datenbank eingetragenen Hashwerts notwendig. Es ist insbesondere keine zusätzliche Prüfung des physischen Dokuments ist notwendig.

Ausführungsformen können den Vorteil haben, dass durch die Verwendung eines virtuellen Dokuments die Bindung an einen spezifischen physischen Dokumentenkörper entfällt. Die Echtheit des virtuellen Dokuments ergibt sich alleine aus der Übereinstimmung seines Hashwerts mit dem in der Datenbank als authentisch hinterlegten und gesicherten Hashwert. Somit ist es nach Ausführungsformen möglich eine Mehrzahl von Dokumenten in virtueller Form auf einem einzigen elektronischen Gerät, insbesondere einem handlichen und tragbaren Gerät wie etwa einem Smartphone, zu speichern.

Bei dem zweiten Computersystem handelt es sich um ein stationäres oder mobiles, insbesondere ein tragbares, Gerät. Bei einem solchen Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um ein stationäres Computersystem, wie beispielsweise einen Personalcomputer. Bei dem ersten Computersystem handelt es sich vorzugsweise um ein stationäres Computersystem, beispielsweise um einen Server.

Nach Ausführungsformen weisen das erste und/oder das zweite Computersystem ein Sicherheitsmodul auf. Ausführungsformen können den Vorteil haben, dass das Sicherheitsmodul Mittel zur effizienten kryptographischen Datensicherung, insbesondere zur Sicherung der Datenübertragung zwischen den beiden elektronischen Geräten, bereitstellt.

Nach Ausführungsformen handelt es sich bei der kryptographisch gesicherten Datenbank um eine auf einer Mehrzahl von Knoten eines Netzwerks redundant gespeicherte Datenbank. Somit liegt die kryptographisch gesicherte Datenbank redundant und dezentral auf einer Mehrzahl von Computersystemen vor. Eine Änderung der kryptographisch gesicherten Datenbank durch das Computersystem eines ID-Providers wird an die anderen Computersysteme des Netzwerks übertragen. Das Netzwerk kann beispielsweise als ein Peer-to-Peer-Netzwerk ausgestaltet sein oder auf einer Client-Server-Struktur beruhen, wobei das Computersystem eines ID-Providers als Server konfiguriert ist. Durch die redundante und dezentrale Speicherung der kryptographisch gesicherten Datenbank kann selbst bei einer Unterbrechung der Netzwerkverbindung sichergestellt werden, dass alle Netzwerkknoten Zugriff auf die kryptographisch gesicherte Datenbank besitzen. Dies gilt insbesondere auch im Falle eines zentralisierten Netzwerks mit Client-Server-Struktur, da bei einer redundanten Speicherung der Datenbank auf allen Clients jeder der Clients über eine Kopie der kryptographisch gesicherten Datenbank verfügen.

Ausführungsformen können den Vorteil haben, dass während einer Prüfung der Echtheit des virtuellen Dokuments durch ein drittes Computersystem, auf welchem eine redundante Kopie der kryptographisch gesicherten Datenbank gespeichert ist, keine Netzwerkverbindung zu dem Computersystem des ID-Providers als einem entfernten zentralen Serversystem bestehen muss. Die Echtheitsprüfung erfolgt vielmehr unter Verwendung der lokal auf dem dritten Computersystem gespeicherten Datenbank. Da die Datenbank zur Echtheitsprüfung virtueller Dokument nur deren als authentisch anerkannten Hashwerte umfasst, kann die Datenbank selbst im Falle einer großen Anzahl virtueller Dokumente eine kompakte Größe aufweisen, sodass nach Ausführungsformen weder spezielle Speichermedien zum Speichern großer Datenmengen noch aufwendige Datenbanksoftwarelösungen zur effizienten Handhabung großer Datenbanken notwendig sind.

Da in der Datenbank nur Hashwerte der virtuellen Dokumente gespeichert sind, lassen sich der Datenbank keine in den Dokumenten enthaltenen Informationen entnehmen. Insbesondere können den Hashwerten keine Informationen entnommen werden, welche die Inhaber der entsprechenden virtuellen Dokumente identifizierend könnten. Somit ist es sicher, die Datenbank dezentral zu speichern. Kein hochgesichertes zentrales Serversystem ist zum Schutz der Integrität der von den virtuellen Dokumenten umfassten Daten notwendig. Bereits die kryptographische Sicherung der Datenbank durch die Speicherung von Informationen in Form von Hashwerten kann ein hohes Maß an Sicherheit gewährleisten. Darüber hinaus ist es möglich, dass es sich bei der Datenbank um eine öffentliche Datenbank handelt, auf welche jedermann zugreifen kann.

Ausführungsformen können den Vorteil haben, dass allein der Besitzer des virtuellen Dokuments, über das virtuelle Dokument verfügt. Der Besitzer hat somit die volle Verfügungshoheit über die in dem virtuellen Dokument enthaltenen Daten inne. Allein der Besitzer entscheidet, wem er das virtuelle nach Erhalt zugänglich macht

Nach Ausführungsformen umfasst das Verfahren ferner:
- Empfangen einer Anfrage zum Ausstellen des virtuellen Dokuments von einem zweiten Computersystem durch den Besitzer des Dokuments, wobei das zweite Computersystem eine Digitalkamera umfasst,
- Senden einer Abfrage von Daten des Dokuments an das zweite Computersystem,
- Empfang der abgefragten Daten durch das zweite Computersystem,
- Verifizieren der abgefragten Daten,
- Erstellen der virtuellen Kopie des Datensatzes des Dokuments unter Verwendung der verifizierten Daten.

Ausführungsformen können den Vorteil haben, dass eine Ausstellung eines virtuellen Dokuments von einem entfernten zweiten Computersystem über ein Netzwerk erfolgen kann, ohne dass der Besitzer des Dokuments mit diesem beim ID-Provider persönlich zugegen sein muss. Somit wird ein sicheres und effizientes Verfahren bereitgestellt, um auf Basis eines physischen Dokuments ein virtuelles Dokument zu erhalten. Nach Ausführungsformen erfolgt die Kommunikation zwischen dem ersten Computersystem des ID-Providers und dem zweiten Computer des Besitzers des Dokuments. Nach Ausführungsformen handelt es sich bei dem zweiten Computersystem um ein mobiles Computersystem, wie ein Laptop oder Smartphone oder ein stationäres Computersystem, wie etwa einen PC.

Nach Ausführungsformen umfasst das Verfahren ferner: Authentisieren des zweiten Computersystems gegenüber dem ersten Computersystem. Ausführungsformen können den Vorteil haben, dass dadurch die Sicherheit des Verfahrens erhöht wird und der zweite Computersystem sicherstellen kann, dass es die Daten des Dokuments an eine vertrauenswürdige Instanz sendet. Dabei erfolgt die Kommunikation zwischen dem ersten und zweiten Computersystem und insbesondere das Übersenden der Daten des Dokuments in verschlüsselter Form. Nach Ausführungsformen können die Daten des Dokuments mit einem vom ersten Computersystem an das zweite Computersystem gesendeten öffentlichen kryptographischen Schlüssel des ID-Providers verschlüsselt sein. Nach Ausführungsformen erfolgt die Kommunikation zwischen dem ersten und zweiten Computersystem über einen mittels Ende-zu-Ende-Verschlüsselung gesicherten Kommunikationskanal.

Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Nach Ausführungsformen umfasst die Abfrage der Daten eine Abfrage virtueller Bildaufnahmen des Dokuments unter verschiedenen Blickwinkeln. Ausführungsformen können den Vorteil haben, dass mittels der Bildaufnahmen zum einen auf dem Dokument wiedergegebene Daten gewonnen werden können und zum anderen die Authentizität des Dokuments anhand von Sicherheitsmerkmalen geprüft werden kann, deren Erscheinungsbild beispielsweise in abhängig vom Blickwinkel variiert.

Sicherheitsmerkmale können beispielsweise auf optisch variable Farben (OVI, "Optical Variable Inks") oder optisch variabler Merkmaler (OVD "Optical Variable Devices") etwa in Form von Hologrammen oder Kinegrammen beruhen. Bei einem Changeable oder Multiple Laser Image (CLI/MLI) werden beispielsweise mehrere Informationen mit einem Laser in den Dokumentkörper geschrieben, sodass je nach Blickwinkel des Betrachters immer nur eine Information zu sehen ist. Ebenso können Druckelemente mit Kippeffekt berücksichtigt werden.

Nach Ausführungsformen werden sowohl Bildaufnahmen von einer Vorderseite als auch von einer Rückseite des Dokuments abgefragt.

Nach Ausführungsformen werden die Bildaufnahme in Form eines Videostreams aufgenommen und dem ersten Computersystem zur Verarbeitung, z.B. Datenextraktion und Verifikation, bereitgestellt.

Nach Ausführungsformen werden an das zweite Computersystem assistierende Rückmeldungen zur relativen Ausrichtung zwischen dem Dokument und der Digitalkamera gesendet. Hierbei kann der Besitzer des Dokuments angeleitet werden unter welchen Winkeln die Aufnahmen zu erstellen sind und/oder informiert werden, ob eine aktuelle Aufnahme den gesetzten Anforderungen genügt. Insbesondere kann der Besitzer des Dokuments Informationen erhalten, wie eine ungenügende Aufnahme zu verbessern ist. Ausführungsformen können den Vorteil haben, dass der Besitzer des Dokuments möglichst fehlerfrei und einfach durch den Prozess begleitet wird. Insbesondere kann so sichergestellt werden, dass die Aufnahme unter den korrekten Winkeln erfolgen, so dass die Sicherheitsmerkmale des Dokuments klar erkannt werden können.

Nach Ausführungsformen umfasst das Verifizieren der abgefragten Daten:
- Verifizieren des Dokuments durch Prüfen von visuellen Sicherheitsmerkmalen des Dokuments unter Verwendung der digitalen Bildaufnahmen des Dokuments unter verschiedenen Blickwinkeln,
- Extrahieren von Daten des Dokuments aus den digitalen Bildaufnahmen.

Ausführungsformen können den Vorteil haben, dass sowohl die Authentizität des zugrundeliegenden Dokuments effizient verifiziert werden als auch Sicherheit darüber gewonnen werden kann, dass die Daten, die zum Ausstellen des virtuellen Dokuments verwendet werden, tatsächlich den Daten entsprechen, die von dem Dokument widergegeben werden. Eine Datenextraktion kann beispielsweise mittels eines Verfahrens zur optische Zeichenerkennung (OCR, "Optical Character Recognition") erfolgen.

Nach Ausführungsformen umfasst das Verifizieren der abgefragten Daten:
- Extrahieren einer Dokumenten-ID aus dem digitalen Bildaufnahmen,
- Verifizieren der Dokumenten-ID.

Ausführungsformen können den Vorteil haben, dass das die Dokumenten-ID dazu verwendet werden kann, um zu verifizieren, ob das entsprechende Dokument von einem dafür verantwortlichen Aussteller auch tatsächlich ausgestellt wurde. Hierzu kann beispielsweise eine entsprechende Anfrage an ein viertes Computersystem des Austellers gesendet werden. Fall der ID-Provider beispielsweise mit dem Aussteller des Dokuments identisch ist, kann eine entsprechende interne Datenbankabfrage erfolgen.

Nach Ausführungsformen umfasst die Abfrage der Daten eine Aufforderung zur Eingabe von Daten des Dokuments über das zweite Computersystem. Nach Ausführungsformen umfasst das Verfahren ferner:
- Vergleichen der extrahierten Daten mit den eingegebenen Daten,
- Korrigieren von Fehlern bei den extrahierten Daten.

Ausführungsformen können den Vorteil haben, die eingegebenen Daten dazu verwendet werden können Fehler beim Extrahieren der Daten, d.h. bei der automatischen Texterkennung, zu identifizieren und zu korrigieren. Bei Abweichungen zwischen den Ergebnissen der automatischen Texterkennung und dem eingegebenen Text kann bestimmt werden, ob die Abweichungen innerhalb eines vordefinierten Fehlerbereichs liegen, so dass es sich mit hoher Wahrscheinlichkeit um einen Fehler bei der Texterkennung handelt. In diesem Fall kann der Fehler der Texterkennung unter Verwendung der eingegebenen Daten korrigiert werden. Liegt die Abweichung außerhalb des vordefinierten Fehlerbereichs, so ist davon auszugehen, dass es sich um keinen Fehler der Texterkennung handelt, sondern um einen Fehler des eingegebenen Textes. In diesem Fall erfolgt keine Fehlerkorrektur. Hierbei kann es sich um einen absichtliche oder einen versehentlichen Fehler handeln.

Nach Ausführungsformen umfasst das Verfahren ferner: Authentifizieren des Besitzers des Dokuments gegenüber dem ID-Provider. Ausführungsformen können den Vorteil haben, dass die Anfrage zur Ausstellung des virtuellen Dokuments auch tatsächlich von einer dazu berechtigten Person stammt und dass das entsprechende virtuellen Dokument am Ende auch zu einer dazu berechtigten Person gelangt.

Nach Ausführungsformen umfasst das Authentifizieren des Besitzers des Dokuments eine Abfrage einer digitalen Bildaufnahme des Besitzers des Dokuments. Nach Ausführungsformen umfasst das Authentifizieren des Besitzers des Dokuments: Vergleichen der digitalen Bildaufnahme des Besitzers des Dokuments mit einem von dem Dokument umfassten Bild einer Person, welcher das Dokument zugeordnet ist. Ausführungsformen können den Vorteil haben, dass die Bildaufnahme des Besitzers des Dokuments mit einem von dem Dokument umfassten Bild verglichen werden kann. Stimmen die Bilder überein, so gilt der Besitzer des Dokuments auf Basis des Dokuments beispielsweise als authentifiziert, falls es sich bei dem Dokument um ein Ausweisdokument handelt.

Nach Ausführungsformen fragt die Abfrage der digitalen Bildaufnahme digitale Bildaufnahmen des Besitzers des Dokuments unter verschiedenen Blickwinkeln ab. Ausführungsformen können den Vorteil haben, dass so sichergestellt werden kann, dass tatsächlich Live-Aufnahmen übermittelt werden und keine alten archivierten Aufnahmen.

Nach Ausführungsformen werden an das zweite Computersystem assistierende Rückmeldungen zur relativen Ausrichtung zwischen dem Besitzer des Dokuments und der Digitalkamera gesendet. Ausführungsformen können den Vorteil haben, dass zum einen das Erstellen der Bildaufnahmen erleichtert und zum anderen durch Anweisungen, welche von Authentifizierung zu Authentifizierung variieren, sichergestellt werden kann, dass die Bildaufnahmen auch tatsächlich spontan erfolgen. Zudem kann sichergestellt werden, dass die Bildaufnahmen eine ausreichende Qualität aufweisen, sodass der Besitzer des Dokuments auf Basis der Bildaufnahmen authentifiziert werden kann.

Nach Ausführungsformen umfasst das Authentifizieren des Besitzers des Dokuments eine Abfrage von digitalen Bildaufnahmen eines Ausweisdokuments des Besitzers unter verschiedenen Blickwinkeln. Nach Ausführungsformen werden an das zweite Computersystem assistierende Rückmeldungen zur relativen Ausrichtung zwischen dem Ausdokument und der Digitalkamera gesendet. Nach Ausführungsformen umfasst das Verifizieren des Ausweisdokuments: Verifizieren des Ausweisdokuments durch Prüfen von visuellen Sicherheitsmerkmalen des Ausweisdokuments unter Verwendung der digitalen Bildaufnahmen des Ausweisdokuments unter verschiedenen Blickwinkeln. Nach Ausführungsformen umfasst das Authentifizieren des Besitzers des Dokuments: Vergleichen der digitalen Bildaufnahme des Besitzers des Dokuments mit einem von dem Ausweisdokument umfassten Bild einer Person, welcher das Ausweisdokument zugeordnet ist. Ausführungsformen können den Vorteil haben, dass falls es sich bei dem auszustellenden virtuellen Dokument bzw. dessen Ursprungsdokument um kein Ausweisdokument handelt, sich der Besitzer des Dokuments durch ein zusätzliches Ausweisdokument effizient authentifizieren kann. Beispielsweise handelt es sich bei dem virtuellen Dokument um ein Zeugnis ohne Bild des Zeugnisinhabers. In diesem Fall kann die Authentifizierung beispielsweise unter Verwendung eines Personalausweises erfolgen.

Nach Ausführungsformen umfasst das Verifizieren des Ausweisdokuments:
- Extrahieren einer Ausweisdokumenten-ID aus dem digitalen Bildaufnahmen,
- Verifizieren der Ausweisdokumenten-ID.

Ausführungsformen können den Vorteil haben, dass durch eine Verifikation der Ausweisdokumenten-ID die Sicherheit bezüglich der Authentizität des Ausweisdokuments zusätzlich erhöht werden kann.

Nach Ausführungsformen ist ein dem asymmetrischen Schlüsselpaar des Ausstellers zugeordneter öffentlicher kryptographische Schlüssel in der Datenbank gespeichert. Ausführungsformen können den Vorteil haben, dass somit auch im Offline-Modus allein auf Basis der kryptographisch geschützten Datenbank ein Zugriff auf den öffentlichen kryptographischen Schlüssel des Ausstellers ermöglicht wird. Handelt es sich bei der Datenbank zudem um eine Datenbank mit einer Blockchain-Struktur, wobei der öffentliche kryptographische Schlüssel des Ausstellers in einer der Transaktionen gespeichert ist, so wird der öffentliche kryptographische Schlüssel durch die mittels der Prüfsummenspeicherung geschützte Kettenstruktur gegen Manipulationen gesichert. Beispielsweise kann die Datenbank den öffentlichen kryptographischen Schlüssel des Ausstellers als eine Adresse umfassen, welcher das virtuelle Dokument zugeordnet ist. Nach Ausführungsformen umfasst die Datenbank ein dem asymmetrischen Schlüsselpaar des Ausstellers zugeordnetes Zertifikat, welches den öffentlichen kryptographischen Schlüssel des Ausstellers umfasst und dessen Authentizität bestätigt. Nach Ausführungsformen wird die Authentizität des entsprechenden Zertifikats durch eine PKI belegt, welche beispielsweise von der Datenbank bereitgestellt wird.

Nach Ausführungsformen umfasst das Verfahren ferner: Speichern des öffentlichen kryptographischen Schlüssels des Ausstellers in dem Datenbankeintrag mit dem signierten Hashwert des virtuellen Dokuments. Ausführungsformen können den Vorteil haben, dass sie einen einfachen Zugriff auf den öffentlichen kryptographischen Schlüssel ermöglichen.

Nach Ausführungsformen umfasst das Senden des virtuellen Dokuments:
- Empfang eines öffentlichen Schlüssels eines dem Besitzer des Dokuments zugeordneten asymmetrischen Schlüsselpaars,
- Verschlüsseln des zu sendenden virtuellen Dokuments mit dem öffentlichen Schlüssel des Besitzers des Dokuments.

Ausführungsformen können den Vorteil haben, dass eine sichere Übertragung des virtuellen Schlüssels an den Besitzer des Dokuments ermöglicht wird.

Nach Ausführungsformen umfasst das Verfahren ferner: Verschlüsseln der Speicher-ID mit dem öffentlichen Schlüssel des Besitzers des Dokuments. Ausführungsformen können den Vorteil haben, dass das auch die Speicher-ID geschützt übertragen wird und somit ein Ziehen einer Verbindung zwischen dem Besitzer des Dokuments und einem mit einer bestimmten Speicher-ID identifizierten Datenbankeintrag verhindert wird.

Nach Ausführungsformen wird die zum Ausstellen des virtuellen Dokuments verwendete virtuelle Kopie des Datensatzes des Dokuments nach dem Ausstellen des virtuellen Dokuments automatisch gelöscht. Ausführungsformen können den Vorteil haben, dass die Daten des Dokuments geschützt bleiben. Es kann auf diese Weise sichergestellt werden, dass am Ende des Verfahrens allein der Besitzer des virtuellen Dokuments die Verfügungshoheit über das virtuelle Dokument sowie der darin enthaltenen Daten besitzt.

Nach Ausführungsformen umfasst das virtuelle Dokument selbst die Speicher-ID. Ausführungsformen können den Vorteil haben, dass sie ein einfaches Auffinden der Speicher-ID und damit des Datenbankeintrags sicherstellen.

Nach Ausführungsformen umfasst das Verfahren ferner: bei Ablaufen der Gültigkeit des virtuellen Dokuments Bereitstellen einer neuen virtuellen Version des Dokuments durch Wiederholen des Ausstellverfahrens. Ausführungsformen können den Vorteil haben, dass das virtuelle Dokument immer wieder auf Basis des zugrundliegenden physischen Dokuments erneuert werden muss.

Ausführungsformen umfassen ferner ein Computerprogrammprodukt, insbesondere ein computerlesbares, nichtflüchtiges Speichermedium, mit ausführbaren Programminstruktionen zum Ausführen eines Verfahrens zum Ausstellen einer virtuellen Version eines Dokuments nach einer der zuvor beschriebenen Ausführungsformen.

Ausführungsformen umfassen ferner ein Computersystem, welches konfiguriert ist zum Ausführen eines Verfahrens zum Ausstellen einer virtuellen Version eines Dokuments nach einer der zuvor beschriebenen Ausführungsformen.

Im Weiteren werden Ausführungsformen der Erfindung mit Bezugnahme auf die Zeichnungen näher erläutert. Es zeigen:
- Figur 1: ein Blockdiagramm einer Ausführungsform eines exemplarischen Systems zur Offline-Echtheitsprüfung eines virtuellen Dokuments, und
- Figur 2: ein Flussdiagramm einer ersten Ausführungsform eines exemplarischen Verfahrens zur Offline-Echtheitsprüfung eines virtuellen Dokuments,
- Figur 3: ein Flussdiagramm einer zweiten Ausführungsform eines exemplarischen Verfahrens zur Offline-Echtheitsprüfung eines virtuellen Dokuments,
- Figur 4: ein Blockdiagramm einer Ausführungsform eines exemplarischen Systems zum Ausstellen einer virtuellen Version eines Dokuments,
- Figur 5: ein schematisches Diagramm einer Ausführungsform eines exemplarischen Dokuments, und
- Figur 6: ein Flussdiagramm einer Ausführungsform eines exemplarischen Verfahrens zum Ausstellen einer virtuellen Version eines Dokuments.

Elemente der nachfolgenden Ausführungsformen, die einander entsprechen, werden mit denselben Bezugszeichen gekennzeichnet.

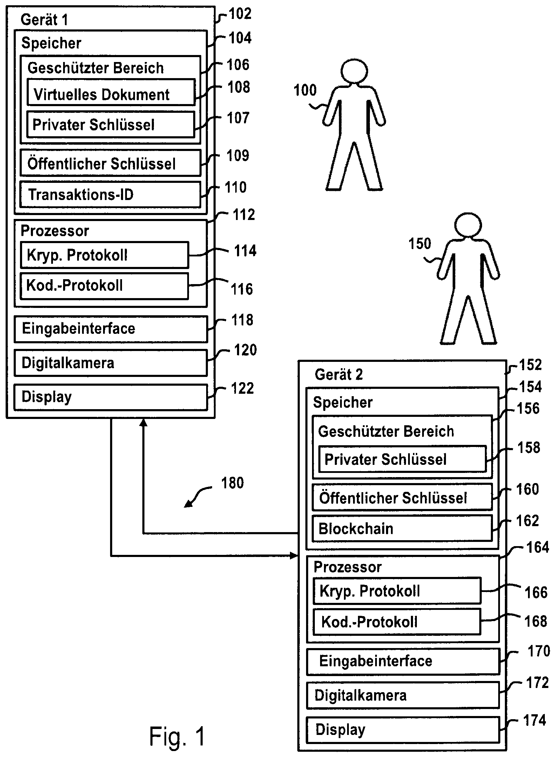

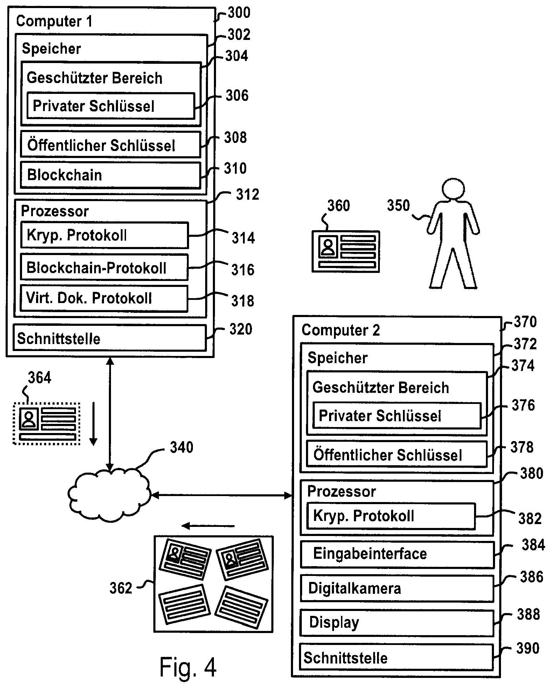

Die Figur 1 zeigt ein Blockdiagramm einer Ausführungsform eines exemplarischen Systems, welches ein erstes und ein zweites elektronische Gerät 102, 152 umfasst. Bei dem ersten elektronischen Gerät 102 des Nutzer 100 handelt es sich um ein tragbares Computersystem, beispielsweise ein Smartphone. Das Smartphone 102 umfasst einen Speicher 104 mit einem geschützten Speicherbereich 106 auf den ein Zugriff nur über einen Prozessor 112 des Smartphone 102 möglich ist. In dem geschützten Speicherbereich 106 ist ein virtuelles Dokument 108 gespeichert. Ferner kann in dem geschützten Speicherbereich 106 ein privater kryptographischer Schlüssel 107 eines dem Inhaber des virtuellen Dokuments zugeordneten asymmetrischen Schlüsselpaars gespeichert sein. Zudem ist in dem Speicher 104 eine Transaktions-ID 110 gespeichert, welche diejenige Transaktion in der Blockchain 162 identifiziert, in der ein signierter Hashwert des virtuellen Dokuments 108 gespeichert ist. Ferner kann in dem Speicher 104 ein öffentlicher kryptographischer Schlüssel 109 des dem Inhaber des virtuellen Dokuments zugeordneten asymmetrischen Schlüsselpaars gespeichert sein. Nach Ausführungsformen umfasst das virtuelle Dokument 108 den öffentlichen Schlüssel 109. Nach Ausführungsformen ist das asymmetrische Schlüsselpaar aus privatem Schlüssel 107 und öffentlichem Schlüssel 109 identisch mit dem asymmetrischen Schlüsselpaar aus privatem Schlüssel 376 und öffentlichem Schlüssel 378 aus Figur 4.

Ferner umfasst das Smartphone 102 einen Prozessor 112 mit kryptographischen Programminstruktionen 114, welche ein kryptographischen Protokoll implementieren. Das kryptographische Protokoll ist insbesondere dazu konfiguriert das virtuelles Dokument 108 mit einem von dem zweiten elektronischen Gerät bereitgestellten öffentlichen Schlüssel 160 eines dem zweiten elektronischen Geräts 152 zugeordneten asymmetrischen Schlüsselpaar zu verschlüsseln. Zudem führt der Prozessor 112 Programminstruktionen 116 aus, welche dazu konfiguriert sind, eine graphische Kodierung von Daten zur Anzeige auf dem Display 122 des Smartphones 102 zu erzeugen sowie mittels Digitalkamera 120 aufgenommene graphisch kodierte Daten zu dekodieren.

Schließlich umfasst das Smartphone 102 noch ein Eingabeinterface 118, welches beispielsweise in das Display 122 integriert sein kann, falls dieses als Touchscreen konfiguriert ist. Das Eingabeinterface 118 dient zur Steuerung des Smartphone 102 durch den Nutzer 100. Das Display 122 ist zur Anzeige eines graphischen Codes, wie etwa eines QR-Codes geeignet. Insbesondere ist das Display 122 auch zur Anzeige eines zusätzlich zeitlich kodierten graphischen Codes geeignet, welcher als Videostream in einer Endlosschleife angezeigt wird. Beispielsweise handelt es sich bei dem Display 122 um ein bistabiles Display, E-Paper, LCD-Display ("Liquid Crystal Display"), OLED-Display ("Organic Light-Emitting Diode dis-play"), oder ein AMOLED-Display ("Active Matrix Organic Light-Emitting Diode dis-play"). Zudem ist in das Smartphone 102 eine Digitalkamera 120 zur Aufnahme von Bildern und Videosequenzen integriert.

Bei dem zweiten elektronischen Gerät 152 des Verifizierers 150 handelt es sich beispielsweise ebenfalls um ein tragbares Computersystem, wie etwa ein Smartphone.

Ebenso könnte es sich bei dem zweiten elektronischen Gerät 152 aber auch um ein speziell konfiguriertes Verifikationsgerät oder ein stationäres Computersystem handeln. Das Smartphone 152 umfasst einen Speicher 154 mit einem geschützten Speicherbereich 156 auf den ein Zugriff nur über einen Prozessor 164 des Smartphone 152 möglich ist. In dem geschützten Speicherbereich 156 ist ein privater Schlüssel 158 eines dem zweiten elektronischen Gerät 152 zugeordneten asymmetrischen Schlüsselpaars gespeichert. Zudem ist in dem Speicher 154 ein dem privaten Schlüssel 158 zugeordneter öffentlicher Schlüssel 160 gespeichert. Ferner ist in dem Speicher 154 eine kryptographische gesicherte Datenbank in Form einer Blockchain 162 gespeichert. In den Blöcken der Blockchain 162 sind signierte Hashwerte von einer Mehrzahl von virtuellen Dokumenten als Transaktionen gespeichert, wobei die Blockchain 162 auch eine Transaktion mit einem signierten Hashwert des virtuellen Dokuments 108 umfasst. Die Transaktion mit dem signierten Hashwert des virtuellen Dokuments 108 wird durch die Transaktions-ID 110 identifiziert.

Ferner umfasst das Smartphone 152 einen Prozessor 164 mit kryptographischen Programminstruktionen 166, welche ein kryptographischen Protokoll implementieren. Das kryptographische Protokoll ist insbesondere dazu konfiguriert das mit dem öffentlichen kryptographischen Schlüssel 160 verschlüsselte virtuelles Dokument 108 mit dem privaten Schlüssel 158 zu entschlüsseln. Zudem führt der Prozessor Programminstruktionen 168 aus, welche dazu konfiguriert sind, eine graphische Kodierung von Daten zur Anzeige auf dem Display 174 des Smartphones 152 zu erzeugen sowie mittels Digitalkamera 172 aufgenommene graphisch kodierte Daten zu dekodieren.

Schließlich umfasst das Smartphone 152 noch ein Eingabeinterface 170, welches beispielsweise in das Display 174 integriert sein kann, falls dieses als Touchscreen konfiguriert ist. Das Eingabeinterface 170 dient zur Steuerung des Smartphone 152 durch den Verifizierer 150. Das Display 174 ist zur Anzeige eines graphischen Codes, wie etwa eines QR-Codes geeignet. Beispielsweise handelt es sich bei dem Display 174 um ein bistabiles Display, E-Paper, LCD-Display ("Liquid Crystal Display"), OLED-Display ("Organic Light-Emitting Diode display"), oder ein AMOLED-Display ("Active Matrix Organic Light-Emitting Diode display"). Zudem ist in das Smartphone 152 eine Digitalkamera 172 zur Aufnahme von Bildern und Videosequenzen integriert.

Mittels des Displays 122 des Smartphones 102 und der Digitalkamera 172 des Smartphones 152 sowie mittels des Displays 174 des Smartphones 152 und der Digitalkamera 120 des Smartphones 102 kann ein bidirektionaler optischer Kommunikationskanal 180 zum Datenaustausch zwischen den beiden Smartphones 102 und 152 implementiert werden.

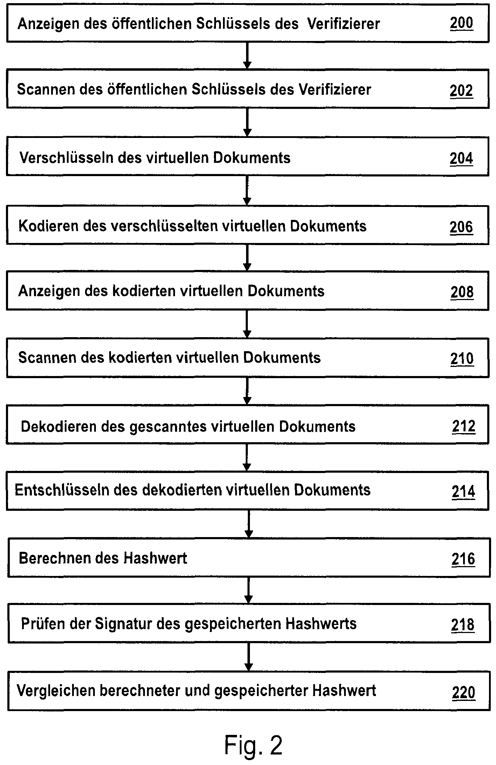

Figur 2 zeigt ein Flussdiagramm einer ersten Ausführungsform eines exemplarischen Verfahrens zur Offline-Echtheitsprüfung eines virtuellen Dokuments. Beispielsweise handelt es sich bei dem virtuellen Dokument um eine virtuelle Version eines Führerscheins. Im Fall einer Verkehrskontrolle, bei welche ein Polizist (Verifizierer) den Führerschein eines Fahrzeugführers (Besitzer) überprüfen möchte, überträgt der Fahrzeugführer das virtuelle Dokument beispielsweise von seinem Smartphone an ein Verifikationsgerät des Polizisten zu einer Offline-Echtheitsprüfung. Bei dem Verifikationsgerät kann es sich entweder ebenfalls um ein Smartphone handeln, auf welchem eine kryptographisch gesicherte Datenbank beispielsweise in Form einer Blockchain gespeichert ist, oder ein speziell für diese Zwecke konfiguriertes Gerät.

In Block 200 zeigt der Verifizierer seinen öffentlichen Schlüssel auf einem Display seines Verifikationsgeräts beispielsweise kodiert in Form eines QR-Codes an. In Block 202 scannt der Besitzer des virtuellen Dokuments den angezeigten öffentlichen Schlüssel des Verifizierers mit einer Digitalkamera seines Smartphones vom Display des Verifizierers ab und dekodiert diesen gegebenenfalls. In Block 204 verschlüsselt der Besitzer das virtuelle Dokument auf seinem Smartphone mit dem öffentlichen Schlüssel des Verifizierers. Das virtuelle Dokument ist in einer Blockchain registriert, auf welche der Verifizierer auch offline mit seinem Verifikationsgerät Zugriff hat, d.h. die Blockchain ist beispielsweise auf dem Verifikationsgerät gespeichert. Zusammen mit dem virtuellen Dokument wird auch die Transaktions-ID, unter der das virtuelle Dokument bzw. dessen Hashwert in der Blockchain registriert wurde, verschlüsselt. In Block 206 wird der verschlüsselte Datensatz aus virtuellem Dokument und Transaktions-ID in einem Videostream, beispielsweise einem QR-Codestream kodiert und in Block 208 von dem Besitzer in einer Endlosschleife auf dessen Display abgespielt.

In Block 210 scannt bzw. filmt der Verifizierer den angezeigten Videostream mit einer Digitalkamera seines Verifikationsgerätes vom Display des Smartphones des Besitzers ab. In Block 212 wird der gescannte Datensatz dekodiert, sobald dieser vollständig empfangen wurde. In Block 214 wird der dekodierte Datensatz mit dem privaten Schlüssel des Verifizierers entschlüsseln. In Block 216 berechnet der Verifizierer den Hashwert des empfangenen virtuellen Dokuments. In Block 218 wird die Signatur des in der Blockchain unter der Transaktions-ID gespeicherten Hashwerts mit dem öffentlichen Schlüssel des Ausstellers des virtuellen Dokuments geprüft. Dieser öffentlichen Schlüssel des Ausstellers wird beispielsweise zusammen mit dem virtuellen Dokument von dem Smartphone des Besitzers des virtuellen Dokuments bereitgestellt oder der öffentlichen Schlüssel ist in der Blockchain gespeichert. Ist die Signatur gültig, so wird in Block 220 der berechnete Hashwert mit dem in der Blockchain gespeicherten Hashwert verglichen. Wenn der berechnete Hashwert mit dem in der Blockchain unter der Transaktions-ID gespeicherten Hashwert übereinstimmt, ist die Echtheitsprüfung erfolgreich und damit das von dem Besitzer übertragene virtuelle Dokument gültig. Mit dem gültigen virtuellen Dokument, beispielsweise einer virtuellen Version eines Führerscheines, kann nun vom Polizisten anhand des Führerscheinfotos überprüft werden, ob es sich bei dem virtuellen Dokument auch tatsächlich um den Führerschein des Fahrzeugführers, der kontrolliert wird, handelt. Zudem kann der Verifizierer dem übertragenen virtuellen Dokument Informationen über den Besitzer entnehmen, deren Authentizität durch die erfolgreiche Echtheitsprüfung belegt wird. Er kann beispielsweise anhand der Führerscheindaten prüfen, ob der Fahrzeugführer zum Führen des Fahrzeugs, in dem er unterwegs ist, auch tatsächlich berechtigt ist.

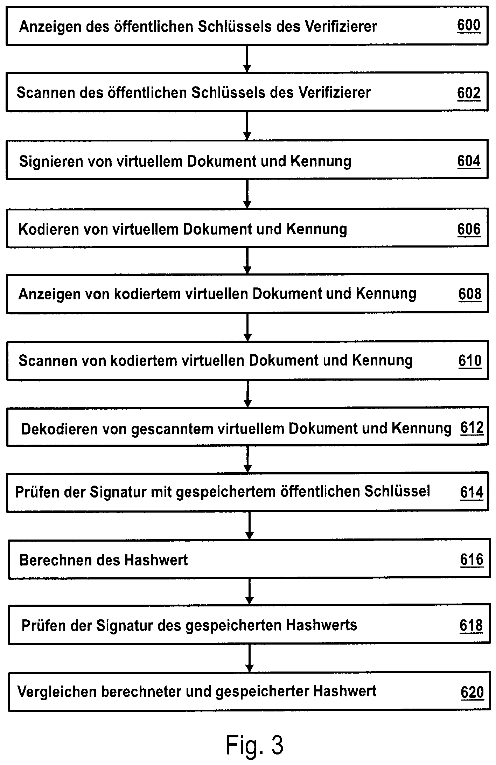

Figur 3 zeigt ein Flussdiagramm einer zweiten Ausführungsform eines exemplarischen Verfahrens zur Offline-Echtheitsprüfung eines virtuellen Dokuments. Beispielsweise handelt es sich bei dem virtuellen Dokument um eine virtuelle Version eines Führerscheins wie in Figur 2. Nach Ausführungsformen umfasst das virtuelle Dokument zudem einen öffentlichen kryptographischen Schlüssel, welcher dem Inhaber des Dokuments zugeordnet ist.

In Block 600 zeigt der Verifizierer seinen öffentlichen Schlüssel auf einem Display seines Verifikationsgeräts beispielsweise kodiert in Form eines QR-Codes an. In Block 602 scannt der Besitzer des virtuellen Dokuments den angezeigten öffentlichen Schlüssel des Verifizierers mit einer Digitalkamera seines Smartphones vom Display des Verifizierers ab und dekodiert diesen gegebenenfalls. In Block 604 signiert der Besitzer das virtuelle Dokument zusammen mit einer Kennung auf seinem Smartphone, wobei die Kennung die auszuführende Übertragung an den Verifizierer, d.h. den aktuellen Verifizierungsvorgang, identifiziert. Die Kennung umfasst beispielsweise einen Zeitstempel und den öffentlichen Schlüssel des Verifizierers. Hierdurch werden der Vorgang an sich durch den Zeitstempel und der bestimmungsgemäße Empfänger anhand des öffentlichen Schlüssels identifiziert. Nach Ausführungsbeispielen kann die Kennung ergänzend und/oder alternativ auch andere Angaben umfassen, welche dazu geeignet sind den entsprechenden Übertragungsvorgang zu identifizieren. Zum Signieren verwendet der Besitzer des Smartphones beispielsweise einen auf dem Smartphone gespeicherten privaten kryptographischen Schlüssel, welcher dem Inhaber des Dokuments zugeordnet ist, d.h. im vorliegenden Fall dem Besitzer des Smartphones. Dieser private kryptographische Schlüssel ist beispielsweise dem von dem virtuellen Dokument umfassten öffentlichen kryptographischen Schlüssel zugeordnet. Das virtuelle Dokument ist zudem in einer Blockchain registriert, auf welche der Verifizierer auch offline mit seinem Verifikationsgerät Zugriff hat, d.h. die Blockchain ist beispielsweise auf dem Verifikationsgerät gespeichert. Zusammen mit dem virtuellen Dokument wird beispielsweise auch die Transaktions-ID, unter der das virtuelle Dokument bzw. dessen Hashwert in der Blockchain registriert wurde, signiert. In Block 606 wird der signierte Datensatz aus virtuellem Dokument, Kennung und Transaktions-ID in einem Videostream, beispielsweise einem QR-Codestream kodiert und in Block 608 von dem Besitzer in einer Endlosschleife auf dessen Display abgespielt. Nach Ausführungsformen kann der Datensatz zudem verschlüsselt sein.

In Block 610 scannt bzw. filmt der Verifizierer den angezeigten Videostream mit einer Digitalkamera seines Verifikationsgerätes vom Display des Smartphones des Besitzers ab. In Block 612 wird der gescannte Datensatz dekodiert, sobald dieser vollständig empfangen wurde. In Block 614 wird die Signatur des Datensatzes mit dem von dem virtuellen Dokument umfassten öffentlichen Schlüssel des Inhabers des virtuellen Dokuments geprüft. In Block 616 berechnet der Verifizierer den Hashwert des empfangenen virtuellen Dokuments. In Block 618 wird die Signatur des in der Blockchain unter der Transaktions-ID gespeicherten Hashwerts mit dem öffentlichen Schlüssel des Ausstellers des virtuellen Dokuments geprüft. Dieser öffentlichen Schlüssel des Ausstellers wird beispielsweise zusammen mit dem virtuellen Dokument von dem Smartphone des Besitzers des virtuellen Dokuments bereitgestellt oder der öffentlichen Schlüssel ist in der Blockchain gespeichert. Ist die Signatur gültig, so wird in Block 620 der berechnete Hashwert mit dem in der Blockchain gespeicherten Hashwert verglichen. Wenn der berechnete Hashwert mit dem in der Blockchain unter der Transaktions-ID gespeicherten Hashwert übereinstimmt, ist die Echtheitsprüfung erfolgreich und damit das von dem Besitzer übertragene virtuelle Dokument gültig. Zudem bestätigt eine Übereinstimmung der Hashwerte auch, dass der zur Signaturprüfung des übertragenen Datensatzes aus virtuellem Dokument, Kennung und Transaktions-ID verwendete öffentliche Schlüssel des Inhabers des virtuellen Dokuments authentisch ist. Sollten Abweichungen zwischen dem durch das übertragene virtuelle Dokument bereitgestellten öffentlichen Schlüssel des Inhabers und dem öffentlichen Schlüssel, welcher in die Berechnung des in der Blockchain hinterlegten Hashwerts eingegangen ist, bestehen, so wird diese Abweichung beim oben beschriebenen Vergleich der Hashwerte offensichtlich. Diese Bestätigung kann somit insbesondere auch offline sichergestellt werden. Figur 4 zeigt ein exemplarisches System zum Ausstellen einer virtuellen Version 364 eines Dokuments 360. Das System umfasst ein Computersystem 300 mit einem Speicher 302, einem Prozessor 312 und einer Kommunikationsschnittstelle 320. In dem Speicher 302 ist ein dem ID-Provider zugeordneter asymmetrisches kryptographisches Schlüsselpaar gespeichert. Das asymmetrische kryptographische Schlüsselpaar umfasst einen privaten kryptographischen Schlüssel 306, welcher in dem geschützten Speicherbereich 304 gespeichert ist, sowie einen öffentlichen kryptographischen Schlüssel 308. Auf den geschützten Speicherbereich 304 ist ein Zugriff nur über eines Prozessors 312 des Computersystems 300 möglich ist. Der private kryptographische Schlüssel 306 dient zum Ausstellen digitaler Signaturen, einschließlich digitaler Siegel, durch den ID-Provider. Beispielsweise wird mit dem privaten kryptographischen Schlüssel 306 ein für das virtuelle Dokument 364 berechneter Hashwert signiert.

Eine kryptographisch gesicherte Datenübertragung von dem Computersystem 370 des Besitzers 350 des Dokuments 360 an das Computersystem 300 des ID-Providers kann beispielsweise implementiert werden, indem das Computersystem 300 dem Computersystem 370 den öffentlichen kryptographischen Schlüssel 308 zur Verschlüsselung zur Verfügung stellt. Mit dem öffentlichen kryptographischen Schlüssel 308 verschlüsselte Daten, welche das Computersystem 300 von dem Computersystem 370 empfängt, können mit dem sicher gespeicherten privaten Schlüssel 306 entschlüsselt werden. Nach Ausführungsformen ist in dem Speicher 302 ein weiteres asymmetrisches Schlüsselpaar gespeichert, dessen öffentlicher kryptographischer Schlüssel dem Computersystem 370 zur Verschlüsselung der Datenübertragung an das Computersystem 300 zur Verfügung gestellt wird. In diesem Fall dient der private kryptographische Schlüssel 306 allein dem Signieren des berechneten Hashwerts des virtuellen Dokuments 364.

Ferner ist in dem Speicher 302 eine kryptographische Datenbank in Form einer Blockchain 310 gespeichert. Wenn das Computersystem 300 ein virtuelles Dokument 364 ausstellt, trägt es einen signierten Hashwert des virtuelles Dokument 364 in die Blockchain 310. Hierzu erzeugt das Computersystem 300 entweder selbst einen neuen Block der Blockchain 310, welcher eine Transaktion mit dem signierten Hashwert des virtuelles Dokument 364 umfasst. Die Blockchain1 10 ist auf einer Mehrzahl von Knoten eines Netzwerks redundant gespeichert. Das Computersystem 300 verbreitet den neu generierten Block an die anderen Teilnehmer, bzw. Knoten eines Netzwerks. Nach einer weiteren Ausführungsform wird die Transaktion von dem Computersystem 300 in ein Mining-Netzwerk, welches die redundanten Versionen der Blockchain umfasst, übertragen. Die Knoten des Netzwerks, welche die neuen Transaktion empfangen verifizieren die Signatur und prüfen, ob die Transaktion gültig ist. Anschließend beginnen die Knoten des Mining-Netzwerks die Transaktion zu verarbeiten, indem sie durch Mining einen neuen Block der Blockchain 300 erzeugen, in dem die Transaktion enthalten ist. Der neue Block wird dann über das Netzwerk verbreitet, sodass auch der Computer 300 den neuen Block empfangen, diesen prüfen und der Blockchain 310 hinzufügen kann.

Der Prozessor 312 ist dazu konfiguriert kryptographische Programminstruktionen 314 auszuführen, welche ein kryptographisches Protokoll implementieren. Das kryptographische Protokoll ist insbesondere zur Sicherung des Datenaustauschs mit dem Computersystem 370 sowie zur Erzeugung von Hashwerten und/oder Signaturen konfiguriert. Beispielsweise dient das kryptographischen Protokoll dazu an das Computersystem 370 zu sendende Daten zu verschlüsseln und von dem Computersystem 370 empfangene Daten zu entschlüsseln. Ferner dient das kryptographischen Protokoll beispielsweise dazu einen Hashwert des virtuellen Dokuments 364 zu berechnen und diesen mit dem privaten Schlüssel 306 zu signieren. Der Prozessor 312 ist ferner konfiguriert Programminstruktionen 316 auszuführen, welche ein Blockchain-Protokoll implementieren, durch dessen Ausführung der Prozessor 312 das Computersystem 300 so steuert, dass neue Transaktionen für die Blockchain generiert und in diese eingetragen werden. Schließlich ist der Prozessor 312 dazu konfiguriert Programminstruktionen 318 auszuführen, welche ein Protokoll zur Ausstellung des virtuellen Dokuments 364 implementieren. Durch Ausführung der Programminstruktionen 318 wird das Computersystem 300 so von dem Prozessor 312 derart gesteuert, dass es das virtuelle Dokument 364 ausstellt, welches eine virtuelle Kopie des Dokuments 360 ist.

Die Kommunikationsschnittstelle 320 ist zur Kommunikation mit dem Computersystem 370 über ein Netzwerk 340 konfiguriert. Die Kommunikation kann kabellos oder über ein Kabel erfolgen. Bei einer kabellosen Verbindung kann es sich insbesondere um beispielsweise um eine WLAN-Verbindung handeln. Beispielsweise kann es sich bei dem Netzwerk 340 um ein öffentliches Computernetzwerk, wie etwa das Internet, oder ein Intranet handeln.

Das Computersystem 370 des Besitzers 350 des Dokuments 360 ist dazu konfiguriert dem Computersystem 300 Daten zum Ausstellen einer virtuellen Version, d.h. eines virtuellen Dokuments 364, des physischen Dokuments 360 bereitzustellen. Bei dem Computersystem 370 kann es sich beispielsweise um ein mobiles Computersystem, wie etwa ein Laptop oder Smartphone, oder ein stationäres Computersystem, wie etwa einen PC, handeln. Das Dokument 360 umfasst einen Dokumentenkörper, auf welchem ein Satz Daten wiedergeben ist. Das Computersystem 370 umfasst einen Speicher 372 mit einem geschützten Speicherbereich 374. Auf den geschützten Speicherbereich 304 ist ein Zugriff nur über eines Prozessors 380 des Computersystems 370 möglich ist. In dem Speicher 372 ist ein dem Besitzer 350 des Dokuments 360 zugeordneter asymmetrisches kryptographisches Schlüsselpaar gespeichert. Das asymmetrische kryptographische Schlüsselpaar umfasst einen privaten kryptographischen Schlüssel 376, welcher in dem geschützten Speicherbereich 374, gespeichert ist sowie einen öffentlichen kryptographischen Schlüssel 378. Indem das Computersystem 370 dem Computersystem 300 den öffentlichen kryptographischen Schlüssel 378 zur Verschlüsselung von an das Computersystem 370 gesendeten Daten zur Verfügung stellt, kann eine sichere Datenübertragung von dem Computersystem 300 an das Computersystem 370 implementiert werden. Die mit dem öffentlichen kryptographischen Schlüssel 378 verschlüsselten Daten können von dem Computersystem 370 mit dem sicher gespeicherten privaten Schlüssel 376 entschlüsselt werden. Zudem kann das Computersystem 300 den öffentlichen kryptographischen Schlüssel 378 in das virtuelle Dokument 364 als dem Inhaber 350 des virtuellen Dokuments 364 zugeordneten öffentlichen kryptographischen Schlüssel aufnehmen.

Ferner umfasst das Computersystem 370 einen Prozessor 380 mit kryptographischen Programminstruktionen 382, welche ein kryptographischen Protokoll implementieren. Das kryptographische Protokoll ist insbesondere zur Sicherung des Datenaustauschs mit dem Computersystem 300 konfiguriert. Beispielsweise dient das kryptographischen Protokoll dazu an das Computersystem 300 zu sendende Daten zu verschlüsseln und von dem Computersystem 300 empfangene Daten zu entschlüsseln. Zudem umfasst das Computersystem 370 ein Display 390 und ein Eingabeinterface 384 zur Steuerung des Computersystems 370 durch den Besitzer 350 des Dokuments 360. Beispielsweise kann das Eingabeinterface 384 in das Display 322 integriert sein, falls dieses als Touchscreen konfiguriert ist. Ferner umfasst das Computersystem 370 eine Digitalkamera 386 zum Aufnehmen von Bildern von dem Dokument 360 und dessen Besitzer 350, wobei die Bandaufnahmen vorzugsweise unter verschiedenen Blickwinkeln erfolgen, beispielsweise in Form einer Mehrzahl von Einzelaufnahmen oder in Form einer Videosequenz. Schließlich umfasst das Computersystem 370 noch eine Kommunikationsschnittstelle 390 zur Kommunikation mit dem Computersystem 300 über das Netzwerk 340. Die Kommunikation kann kabellos oder über ein Kabel erfolgen. Bei einer kabellosen Verbindung kann es sich insbesondere um beispielsweise um eine WLAN-Verbindung handeln.

Das Computersystem 370 sendet die mittels der Digitalkamera 386 gemachten Bildaufnahmen 362 kryptographisch gesichert über das Netzwerk 340 an das Computersystem 300. Das Computersystem 300 wertet die empfangenen Bildaufnahmen 362 aus, extrahiert Daten und erzeugt, falls die Bildaufnahmen 362, das Dokument 360 und der Besitzer 350 authentisch sind, ein virtuelles Dokument 364 unter Verwendung der extrahierten Daten. Das so erzeugte virtuelles Dokument 364 wird als signierter Hashwert in die Blockchain 310 eingetragen und zusammen mit dem öffentlichen Schlüssel 308 kryptographisch gesichert über das Netzwerk 340 an das Computersystem 370 gesendet.

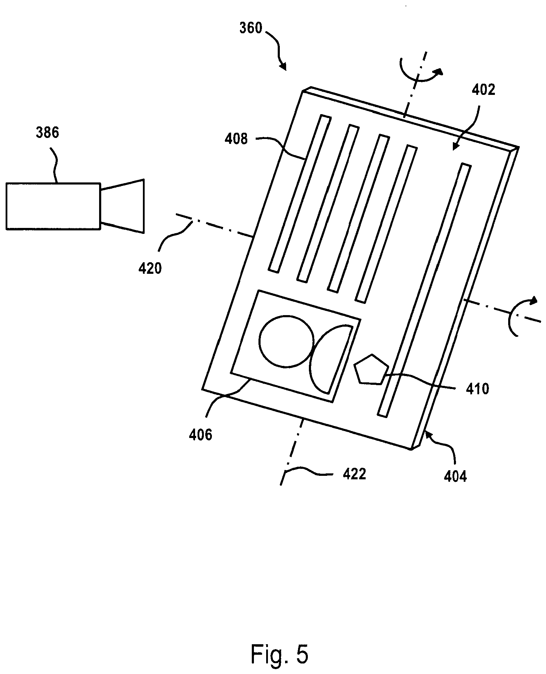

Figur 5 zeigt ein Dokument 360, welches zumindest ein visuellen Sicherheitsmerkmal 410 umfasst, dessen Aussehen mit dem Blickwinkel, unter dem es betrachtet wird, variiert. Somit ist das Aussehen des Sicherheitsmerkmal 410 in digitalen Bildaufnahmen des Dokuments 360, welcher von der Digitalkamera 386 aufgenommen werden, abhängig von der relativen Ausrichtung zwischen dem Dokument 360 und der Digitalkamera 386. Zur Authentifizierung des Dokuments 360 wird dieses mit der Digitalkamera 386 unter verschieden Blickwinkel aufgenommen, indem das Dokument 360 beispielsweise um seine Längsachse 422 und/oder seine Querachse 420 rotiert wird. Handelt es sich bei dem Sicherheitsmerkmal 410 um ein authentisches Sicherheitsmerkmal, ändert sich dessen Aussehen in einer festgelegten Weise in Abhängigkeit von dem Blickwinkel unter welchem die Digitalkamera 386 das Dokument 360, insbesondere in Form einer Videosequenz, aufnimmt. Die Aufnahme des Dokuments 360 erfolgt beispielsweise in Form eines assistierten Verfahrens, bei welchem dem Besitzer des Dokuments 360 Anweisungen und/oder Rückmeldungen zur Verfügung gestellt werden zur korrekten relativen Ausrichtung zwischen dem Dokument 360 und der Digitalkamera 386. Diese Anweisung können neben dem Blickwinkel beispielsweise auch den Abstand, die laterale Ausrichtung in der Bildebene und/oder die Beleuchtung des Dokuments 360 betreffen.

Bei dem Dokument 360 kann es sich beispielsweise um ein Ausweisdokument handeln, welches visuell Daten 406, 408 des Inhabers des Dokuments 360 wiedergibt. Diese Daten 408 können beispielsweise in Textform Attribute des Inhabers umfassen, wie etwa dessen Namen, Wohnort, Nationalität etc. sowie Attribute des Dokuments 360, wie etwa eine Dokumenten-ID, ein Ausstellungsdatum, ein Gültigkeitsdatum, die ausstellende Institution etc. Beispielsweise umfassen die Daten 408 einen maschinenlesbaren Bereich ("Machine Readable Zone", abgekürzt MRZ), beispielsweise nach dem Standard ICAO Dokument 9303. Im Falle eines Führerscheins kann das Dokument 360 beispielsweise zusätzlich Attribute des Inhabers enthalten, welche die Fahrzeugklassen angeben, für welche der Inhaber des Führerscheins eine Berechtigung zum Führen von Fahrzeugen besitzt. Die Daten 406 können ferner ein Bild des Inhabers des Dokuments 360 umfassen.

Das Dokument kann relevante Daten sowohl auf seiner Vorderseite 402 als auch auf seiner Rückseite 404 umfassen. Vorzugsweise werden mit der Digitalkamera 386 Bildaufnahmen daher sowohl der Vorderseite 402 als auch auf der Rückseite 404 des Dokuments 360 unter verschieden Blickwinkeln gemacht.

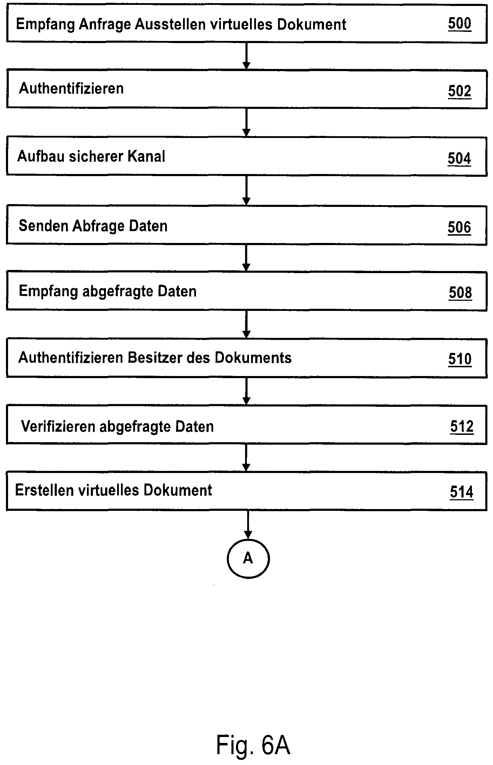

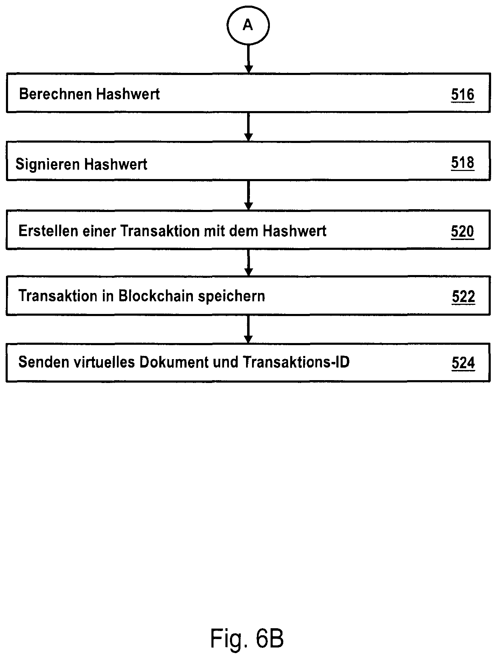

Figur 6 zeigt ein Flussdiagramm einer Ausführungsform eines exemplarischen Verfahrens zum Ausstellen einer virtuellen Version eines Dokuments durch ein Computersystem eines ID-Providers. Das Verfahren zur Ausstellung eines virtuellen Dokuments wird im Folgenden am Beispiel eines Führerscheindokumentes beschrieben. In Block 500 empfängt das Computersystem eines ID-Provider eine Anfrage zum Ausstellen des virtuellen Dokuments von einem Computersystem des Besitzers eines physischen Originaldokuments, d.h. eines herkömmlichen Führerescheins. In Block 502 erfolgt eine Authentifizierung des Computersystems des ID-Providers durch das Computersystem des Besitzers. Beispielsweise überträgt das Computersystem des ID-Providers ein Zertifikat mit einem öffentlichen Schlüssel eines dem ID-Provider zugeordneten asymmetrischen Schlüsselpaars an das Computersystem des Besitzers. Durch Ausführen eines kryptographischen Protokolls wird sodann durch das Computersystem des Besitzers eine so genannte Challenge generiert, d.h. beispielsweise eine Zufallszahl. Diese Zufallszahl wird mit dem in dem empfangenen Zertifikat enthaltenen öffentlichen Schlüssel verschlüsselt. Das resultierende Chiffrat wird von dem Computersystem des Besitzers an das Computersystem des ID-Providers gesendet. Durch Ausführen eines kryptographischen Protokolls entschlüsselt das Computersystem des ID-Providers das Chiffrat mit Hilfe eines privaten Schlüssels, welcher dem zuvor mit dem Zertifikat an das Computersystem des Besitzers gesendeten öffentlichen Schlüssel zugeordnet ist, und erhält so die Zufallszahl. Die Zufallszahl sendet das Computersystem des ID-Providers an das Computersystem des Besitzers zurück. Durch Ausführung des kryptographischen Protokolls wird dort geprüft, ob die von dem Computersystem des ID-Providers empfangene Zufallszahl mit der ursprünglich generierten Zufallszahl, d.h. der Challenge, übereinstimmt. Ist dies der Fall, so gilt das Computersystem des ID-Providers als gegenüber dem Computersystem des Besitzers authentifiziert. In analoger Weise kann zusätzlich eine Authentifizierung des Computersystems des Besitzers durch das Computersystem des ID-Providers erfolgen unter Verwendung eines Zertifikats mit einem öffentlichen Schlüssel des Computersystems des Besitzers. In Block 504 wird ein sicherer Kommunikationskanal zwischen dem Computersystem des ID-Providers erfolgen und dem Computersystem des Besitzers aufgebaut, beispielsweise mittels einer Ende-zu-Ende-Verschlüsselung. Für die Ende-zu-Ende-Verschlüsselung kann beispielsweise die zuvor berechnete Zufallszahl als symmetrischer Schlüssel verwendet werden.

In Block 506 wird eine Abfrage von Daten des Führerscheins an das Computersystem des Besitzers gesendet. Die Datenabfrage umfasst dabei beispielsweise eine Aufforderung Bildaufnahmen des Führerscheins, vorzugsweise als Videosequenz, unter verschieden Blickwinkel anzufertigen, sodass sowohl Sicherheitsmerkmale identifiziert als auch von dem Führerschein Daten gelesen werden können. Hierzu können in einem assistierten Prozess sowohl Informationen zur korrekten relativen Ausrichtung zwischen dem Dokument und der Digitalkamera zur Verfügung stellt als auch Rückmeldungen, ob die resultierende Aufnahmen die Voraussetzungen für eine erfolgreiche Auswertung durch das Computersystem des ID-Providers erfüllen. Ferner kann die Abfrage von Daten eine Aufforderung zum Erstellen von Bildaufnahmen des Besitzers des Führerscheins zu erstellen und/oder Daten des Führerscheins in ein mit der Abfrage bereitgestelltes Formular einzutragen. In Block 508 werden die abgefragten Daten, d.h. die Bildaufnahmen von Dokument und/oder Besitzer sowie ggf. das ausgefüllte Formular, empfangen. In Block 510 wird der Besitzer des Dokuments anhand der in Block 508 empfangen Daten authentifiziert. Hierzu wird beispielsweise die Bildaufnahme des Besitzers des Führerscheins mit dem auf dem Führerschein abgedruckten Bild des Führerscheininhabers abgeglichen. Stimmen beide Bilder in einem ausreichenden Maß überein, wird der Besitzer des Führerscheins als der Inhaber des Führerscheins identifiziert. Im Falle eines Dokuments ohne integriertes Foto des Inhabers, kann eine Authentifizierung des Besitzers des Dokuments eine Datenabfrage eines Ausweisdokuments des Besitzers, wie etwa eines Personalausweises, umfassen. Hierzu können in analoger Weise Bildaufnahmen des Ausweisdokuments empfangen werden und die Authentifizierung anhand des von dem Ausweisdokument bereitstellten Bildes des Ausweisinhabers sowie von Attributen des Ausweisinhabers erfolgen. Die Attribute umfassen beispielsweise Namen, Geburtsdatum und Geburtsort des Ausweisinhabers. Umfasst auch das Dokument, von welchem eine virtuelle Kopie erstellt werden soll, diese Attribute, so kann der Besitzer des Dokuments diesem als legitimer Besitzer und Antragssteller zugeordnet werden. In Block 512 werden die abgefragten Daten verifiziert, wobei anhand der Bildaufnahmen des Führerscheins insbesondere geprüft wird, ob dieser die Sicherheitsmerkmale aufweist, welche ihn als ein authentisches Originaldokument kennzeichnen. Ist den Bildaufnahmen zu entnehmen, dass der Führerschein die korrekten Sicherheitsmerkmale aufweist, ist dieser authentifiziert und damit seine Daten verifiziert. Ferner werden beispielsweise die auf dem Führerschein wiedergegebene Daten in Textform mittels optische Zeichenerkennung extrahiert. Falls zusätzliche Texteingaben des Besitzers übermittelt wurden, können die mittels optische Zeichenerkennung extrahierten Daten unter Verwendung der eingegebenen Daten auf ihre Korrektheit überprüft und ggf. korrigiert werden.

In Block 514 wird aus den extrahierten Daten das virtuelle Dokument als virtuelle Kopie des Führerscheins erstellt, welche einen elektronischen Datensatz umfasst. Dieser Datensatz umfasst neben den mittels optischer Zeichenerkennung extrahierten Daten auch das auf dem Führerschein abgebildeten Bildes des Inhabers. Nach Ausführungsformen umfasst das virtuelle Dokument zudem einen öffentlichen kryptographischen Schlüssel eines dem Inhaber des virtuellen Dokuments zugeordneten asymmetrischen Schlüsselpaars. Nach Ausführungsformen wird vor der Aufnahme des öffentlichen kryptographischen Schlüssels in das virtuelle Dokument, die Authentizität des entsprechenden Schlüssels unter Verwendung eines dem Schlüssel zugeordneten Zertifikats überprüft. In Block 516 wird ein Hashwert des ausgestellten virtuellen Führerscheins berechnet und in Block 518 mit einem privaten kryptographischen Schlüssel des ID-providers signiert. In Block 520 wird eine Transaktion für die Blockchain erzeugt, welche den signierten Hashwert des virtuellen Führerscheins umfasst. In Block 522 wird die Transaktion in einen neuen Block der Blockchain eingetragen, welcher in einem entsprechenden Mining-Prozess erzeugt wird. Das Erzeugen des neuen Blocks mit der darin eingetragenen Transaktion erfolgt beispielsweise durch das Computersystem des ID-Providers. Nach weiteren Ausführungsformen erfolgt das Erzeugen des neuen Blocks durch ein weiteres Computersystem eines Miningnetzwerks zum Erzeugen neuer Blöcke der Blockchain. In Block 524 wird das virtuelle Führerscheindokument zusammen mit der Transaktions-ID der Transaktion, welche den signierten Hashwert des virtuellen Führerscheins umfasst, über den sicheren Kanal an das Computersystem des Besitzers des originalen Führerscheins gesendet. Nach Ausführungsformen werden das virtuelle Führerscheindokument sowie die Transaktions-ID vor dem Senden von dem Computersystem des ID-Providers zusätzlich mit einem öffentlichen Schlüssel des Besitzers des originalen Führerscheins verschlüsselt.

Mögliche vorteilhafte Ausführungsformen umfassen die folgenden Merkmalskombinationen:
1. Verfahren zur Offline-Echtheitsprüfung eines virtuellen Dokuments mittels eines ersten und eines zweiten elektronischen Geräts,
   wobei das erste elektronische Gerät einen ersten Speicher umfasst, in welchem das virtuelle Dokument und eine Speicher-ID des virtuellen Dokuments gespeichert sind,
   wobei das zweite elektronische Gerät einen zweiten Speicher umfasst, in welchem eine kryptographisch gesicherte Datenbank gespeichert ist, welche Hashwerte von einer Mehrzahl von virtuellen Dokumenten umfasst, wobei die Speicher-ID des virtuellen Dokuments einen Eintrag der Datenbank mit dem Hashwert des virtuellen Dokuments identifiziert,
   wobei das Verfahren umfasst:
      - Übertragen des virtuellen Dokuments zusammen mit der Speicher-ID von dem ersten elektronischen Gerät an das zweite elektronische Gerät,
      - Berechnen eines Hashwerts des virtuellen Dokuments durch das zweite elektronische Gerät,
      - Identifizieren des Datenbankeintrags mit dem Hashwert des virtuellen Dokuments durch das zweite elektronische Gerät unter Verwendung der Speicher-ID des virtuellen Dokuments,
      - Vergleichen des berechneten Hashwerts mit dem in dem identifizierten Datenbankeintrag gespeicherten Hashwert des virtuellen Dokuments, wobei die Echtheit des virtuellen Dokuments bestätigt wird, falls beide Hashwerte übereinstimmen.
2. Verfahren nach Punkt 1, wobei die Übertragung des virtuellen Dokuments von dem ersten elektronischen Gerät an das zweite elektronische Gerät in verschlüsselter Form erfolgt und das Verfahren dazu ferner umfasst:
   - Übertragen eines kryptographischen Schlüssels des zweiten elektronischen Geräts von dem zweiten elektronischen Gerät an das erste elektronische Gerät,
   - Verschlüsseln des virtuellen Dokuments durch das erste Gerät mit dem kryptographischen Schlüssel des zweiten Geräts vor der Übertragung an das zweite elektronische Gerät,
   - Entschlüsseln des verschlüsselten virtuellen Dokuments durch das zweite elektronische Gerät nach der Übertragung.
3. Verfahren nach einem der vorhergehenden Punkte, wobei die Übertragung des virtuellen Dokuments von dem ersten elektronischen Gerät an das zweite elektronische Gerät ferner eine Signatur mit einem privaten kryptographischen Schlüssel eines einem Inhaber des virtuellen Dokuments zugeordneten asymmetrischen Schlüsselpaars umfasst, wobei die kryptographisch gesicherte Datenbank einen öffentlichen kryptographischen Schlüssels des dem Inhaber zugeordneten asymmetrischen Schlüsselpaars umfasst, wobei das Verfahren dazu ferner umfasst:
   - Berechnen eines Hashwerts aus dem virtuellen Dokument und einer Kennung, welche die Übertragung des virtuellen Dokuments von dem ersten elektronischen Gerät an das zweite elektronische Gerät identifiziert,
   - Signieren des Hashwerts mit dem privaten kryptographischen Schlüssel des Inhabers des virtuellen Dokuments vor der Übertragung an das zweite elektronische Gerät,
   - Überprüfen der Signatur durch das zweite elektronische Gerät nach der Übertragung unter Verwendung des von der kryptographisch gesicherten Datenbank umfassten öffentlichen kryptographischen Schlüssels des Inhabers.
4. Verfahren nach Punkt 3, wobei die Kennung einen öffentlichen Schlüssel eines dem zweiten elektronischen Gerät zugeordneten asymmetrischen Schlüsselpaars umfasst.
5. Verfahren nach einem der vorhergehenden Punkte, wobei der in der Datenbank gespeicherte Hashwert des virtuellen Dokuments mit einem privaten Schlüssel eines einem Aussteller des virtuellen Dokuments zugeordneten asymmetrischen Schlüsselpaars signiert ist,
   wobei das Verfahren ferner umfasst:
   Überprüfen der Signatur des in dem identifizierten Datenbankeintrag gespeicherten Hashwerts durch das zweite elektronische Gerät unter Verwendung eines öffentlichen kryptographischen Schlüssels des dem Aussteller zugeordneten asymmetrischen Schlüsselpaars.
6. Verfahren nach Punkt 5, wobei die Datenbank zusätzlich den öffentlichen kryptographischen Schlüssel des Ausstellers umfasst.
7. Verfahren nach Punkt 6, wobei der Datenbankeintrag zusätzlich den öffentlichen kryptographischen Schlüssel des Ausstellers umfasst.
8. Verfahren nach einem der vorhergehenden Punkte, wobei die Speicher-ID zusammen mit dem virtuellen Dokument durch das erste Gerät mit dem kryptographischen Schlüssel des zweiten Geräts verschlüsselt wird.
9. Verfahren nach einem der vorhergehenden Punkte, wobei das virtuelle Dokument selbst die Speicher-ID umfasst.
10. Verfahren nach einem der vorhergehenden Punkte, wobei das virtuelle Dokument in einem geschützten Speicherbereich des ersten Speichers gespeichert ist.
11. Verfahren nach einem der vorhergehenden Punkte, wobei es sich bei der kryptographisch gesicherten Datenbank um eine Blockchain handelt und der Hashwert des virtuellen Dokuments als Transaktion in einem Block der Blockchain gespeichert ist.
12. Verfahren nach Punkt 11, wobei es sich bei der Speicher-ID um eine Transaktions-ID der Transaktion handelt, welche den signierten Hashwert des virtuellen Dokuments umfasst.
13. Verfahren nach einem der vorhergehenden Punkte, wobei das erste elektronische Gerät ein erstes Display und eine erste Digitalkamera umfasst,
   wobei das zweite elektronische Gerät ein zweites Display und eine zweite Digitalkamera umfasst,
   wobei das Übertragen des verschlüsselten virtuellen Dokuments umfasst:
      - Anzeigen des verschlüsselten virtuellen Dokuments auf dem ersten Display,
      - Aufnehmen des dargestellten verschlüsselten virtuellen Dokuments mit der zweiten Digitalkamera.
14. Verfahren nach Punkt 13, wobei das verschlüsselte virtuelle Dokument auf dem ersten Display als zeitlich kodierter graphischer Code in Form eines Videostreams angezeigt wird.
15. Verfahren nach Punkt 14, wobei es sich bei dem zeitlich kodierten graphischen Code um einen QR-Codestream handelt.
16. Verfahren nach einem der Punkte 13 bis 15, wobei das Übertragen des dem zweiten elektronischen Gerät zugeordneten kryptographischen Schlüssels umfasst:
   - Anzeigen des kryptographischen Schlüssels auf dem zweiten Display,
   - Aufnehmen des dargestellten kryptographischen Schlüssels mit der ersten Digitalkamera.
17. Verfahren nach Punkt 16, wobei der dem zweiten elektronischen Gerät zugeordnete kryptographische Schlüssel auf dem zweiten Display als graphischer Code angezeigt wird.
18. Verfahren nach Punkt 17, wobei es sich bei dem kodierten graphischen Code um einen QR-Code handelt.
19. Verfahren nach einem der Punkte 2 bis 18, wobei es sich bei dem kryptographischen Schlüssel des zweiten elektronischen Geräts um den öffentlichen Schlüssel des dem zweiten elektronischen Gerät zugeordneten asymmetrischen Schlüsselpaars handelt und wobei das Entschlüsseln des verschlüsselten virtuellen Dokuments unter Verwendung eines privaten Schlüssels des asymmetrischen Schlüsselpaars erfolgt, welcher in einem geschützten Speicherbereich des zweiten Speichers gespeichert ist.
20. Verfahren nach einem der Punkte 2 bis 18, wobei es sich bei dem kryptographischen Schlüssel des zweiten elektronischen Geräts um einen symmetrischen kryptographischen Schlüssel handelt.
21. Verfahren nach einem der vorhergehenden Punkte, wobei es sich bei dem ersten und/oder zweiten elektronischen Gerät um ein Mobilfunkgerät, insbesondere ein Smartphone, handelt.
22. Verfahren nach einem der vorhergehenden Punkte, wobei sich zumindest das zweite elektronische Gerät in einem Offline-Modus befindet.
23. Verfahren nach einem der vorhergehenden Punkte, wobei das virtuelle Dokument ein Ablaufdatum umfasst, welches ein Ende der Gültigkeit des virtuellen Dokuments festlegt.
24. Verfahren nach einem der vorhergehenden Punkte, wobei das virtuelle Dokument nach der Offline-Echtheitsprüfung automatisch von dem zweiten elektronischen Gerät gelöscht wird.
25. Verfahren zum Ausstellen einer virtuellen Version eines Dokuments durch ein erstes Computersystem eines ID-Providers zur Offline-Echtheitsprüfung nach einem der Punkte 1 bis 24, wobei das Dokument eine visuelle Widergabe eines Datensatzes aufweist,
   wobei das Verfahren umfasst:
   - Erstellen des virtuellen Dokuments als virtueller Version des Dokuments, welches eine elektronische Kopie des Datensatzes des Dokuments umfasst,
   - Berechnen eines Hashwerts des virtuellen Dokuments,
   - Signieren des Hashwerts mit einem privaten Schlüssel eines dem Austeller des virtuellen Dokuments zugeordneten asymmetrischen Schlüsselpaars,
   - Speichern des signierten Hashwerts in einem Eintrag in einer kryptographisch gesicherten Datenbank zur Ausstellung des virtuellen Dokuments,
   - Senden des virtuellen Dokuments an einen Besitzer des Dokuments zusammen mit einer Speicher-ID des virtuellen Dokuments, wobei die Speicher-ID den Eintrag der Datenbank mit dem signierten Hashwert des virtuellen Dokuments identifiziert.
26. System zur Offline-Echtheitsprüfung eines virtuellen Dokuments, wobei das System ein erstes und ein zweites elektronisches Gerät umfasst,
   wobei das erste elektronische Gerät einen ersten Speicher umfasst, in welchem das virtuelle Dokument und eine Speicher-ID des virtuellen Dokuments gespeichert sind,
   wobei das zweite elektronische Gerät einen zweiten Speicher umfasst, in welchem eine kryptographisch gesicherte Datenbank gespeichert ist, welche Hashwerte von einer Mehrzahl von virtuellen Dokumenten umfasst, wobei die Speicher-ID des virtuellen Dokuments einen Eintrag der Datenbank mit dem Hashwert des virtuellen Dokuments identifiziert,
   wobei das System dazu konfiguriert ist ein Verfahren nach einem den Punkte 1 bis 24 auszuführen.
27. Computerprogrammprodukt, insbesondere ein computerlesbares, nichtflüchtiges Speichermedium, mit ausführbaren Programminstruktionen zum Ausführen eines Verfahrens nach Punkt 25.
28. Computerprogramm, insbesondere ein auf einem Server zum Herunterladen über ein Netzwerk bereitgestelltes Computerprogramm, mit ausführbaren Programminstruktionen zum Ausführen eines Verfahrens nach Punkt 25.
29. Computersystem, welches konfiguriert ist zum Ausführen eines Verfahrens nach Punkt 25.

### Bezugszeichenliste

- 100: Besitzer virtuelles Dokument
- 102: erstes elektronisches Gerät
- 104: Speicher
- 106: geschützter Speicherbereich
- 107: privater Schlüssel
- 108: virtuelles Dokument
- 109: öffentlicher Schlüssel
- 110: Transaktions-ID
- 112: Prozessor
- 114: kryptographisches Protokoll
- 116: Kodierungsprotokoll
- 118: Eingabeinterface
- 120: Digitalkamera
- 122: Display
- 150: Verifizierer
- 152: zweites elektronisches Gerät
- 154: Speicher
- 156: geschützter Speicherbereich
- 158: privater Schlüssel
- 160: öffentlicher Schlüssel
- 162: Blockchain
- 164: Prozessor
- 166: kryptographisches Protokoll
- 168: Kodierungsprotokoll
- 170: Eingabeinterface
- 172: Digitalkamera
- 174: Display
- 180: optischer Kommunikationskanal
- 300: erster Computer
- 302: Speicher
- 304: geschützter Speicherbereich
- 306: privater Schlüssel
- 308: öffentlicher Schlüssel
- 310: Blockchain
- 312: Prozessor
- 314: kryptographisches Protokoll
- 316: Blockchain-Protokoll
- 318: Protokoll zum Ausstellen eines virtuellen Dokuments
- 320: Kommunikationsschnittstelle
- 340: Netzwerk
- 350: Besitzer Dokument
- 360: Dokument
- 370: zweiter Computer
- 372: Speicher
- 374: geschützter Bereich
- 376: privater Schlüssel
- 378: öffentlicher Schlüssel
- 380: Prozessor
- 382: kryptographisches Protokoll
- 384: Eingabeinterface
- 386: Digitalkamera
- 388: Display
- 390: Kommunikationsschnittstelle
- 402: Vorderseite
- 404: Rückseite
- 406: Bild
- 408: Daten
- 410: Sicherheitsmerkmal
- 420: erste Achse
- 422: zweite Achse

## Patentansprüche

1. Verfahren zur Offline-Echtheitsprüfung eines virtuellen Dokuments (108) mittels eines ersten und eines zweiten elektronischen Geräts (102, 152),
wobei das erste elektronische Gerät (102) einen ersten Speicher (104) umfasst, in welchem das virtuelle Dokument (108) und eine Speicher-ID (110) des virtuellen Dokuments (108) gespeichert sind_und wobei die Speicher-ID (110) zusammen mit dem virtuellen Dokument (108) durch das erste Gerät (102) mit einem kryptographischen Schlüssel des zweiten Geräts (152) verschlüsselt wird,
wobei das zweite elektronische Gerät (152) einen zweiten Speicher (154) umfasst, in welchem eine kryptographisch gesicherte Datenbank (162) gespeichert ist, welche als authentisch hinterlegte Hashwerte von einer Mehrzahl von virtuellen Dokumenten umfasst, wobei die Speicher-ID (110) des virtuellen Dokuments (108) einen Eintrag der Datenbank (162) mit dem Hashwert des virtuellen Dokuments (108) identifiziert, wobei es sich bei der kryptographisch gesicherten Datenbank um eine Blockchain (162) handelt und der Hashwert des virtuellen Dokuments als Transaktion in einem Block der Blockchain (162) gespeichert ist, und wobei das zweite elektronische Gerät (152) keine Online-Verbindung zu einem entfernten zentralen Serversystem zur Echtheitsüberprüfung des virtuellen Dokuments (108) benötigt,
wobei das Verfahren umfasst:
• Übertragen des virtuellen Dokuments (108) zusammen mit der Speicher-ID (110) von dem ersten elektronischen Gerät (102) an das zweite elektronische Gerät (152),
• Berechnen eines Hashwerts des virtuellen Dokuments (108) durch das zweite elektronische Gerät (152),
• Identifizieren des Datenbankeintrags mit dem Hashwert des virtuellen Dokuments (108) durch das zweite elektronische Gerät (152) unter Verwendung der Speicher-ID (110) des virtuellen Dokuments (108),
• Vergleichen des berechneten Hashwerts mit dem in dem identifizierten Datenbankeintrag gespeicherten Hashwert des virtuellen Dokuments (108), wobei die Echtheit des virtuellen Dokuments (108) bestätigt wird, falls beide Hashwerte übereinstimmen.

2. Verfahren nach Anspruch 1, wobei die Übertragung des virtuellen Dokuments (108) von dem ersten elektronischen Gerät (102) an das zweite elektronische Gerät (152) in verschlüsselter Form erfolgt und das Verfahren dazu ferner umfasst:
• Übertragen des kryptographischen Schlüssels (160) des zweiten elektronischen Geräts (152) von dem zweiten elektronischen Gerät (152) an das erste elektronische Gerät (102),
• Verschlüsseln des virtuellen Dokuments (108) durch das erste Gerät (102) mit dem kryptographischen Schlüssel (160) des zweiten Geräts (152) vor der Übertragung an das zweite elektronische Gerät (152),
• Entschlüsseln des verschlüsselten virtuellen Dokuments (108) durch das zweite elektronische Gerät (152) nach der Übertragung.

3. Verfahren nach einem der vorhergehenden Ansprüche, wobei die Übertragung des virtuellen Dokuments (108) von dem ersten elektronischen Gerät (102) an das zweite elektronische Gerät (152) ferner eine Signatur mit einem privaten kryptographischen Schlüssel (107) eines einem Inhaber (100) des virtuellen Dokuments (108) zugeordneten asymmetrischen Schlüsselpaars umfasst, wobei die kryptographisch gesicherte Datenbank (162) einen öffentlichen kryptographischen Schlüssels (109) des dem Inhaber (100) zugeordneten asymmetrischen Schlüsselpaars umfasst, wobei das Verfahren dazu ferner umfasst:
• Berechnen eines Hashwerts aus dem virtuellen Dokument (108) und einer Kennung, welche die Übertragung des virtuellen Dokuments (108) von dem ersten elektronischen Gerät (102) an das zweite elektronische Gerät (152) identifiziert,
• Signieren des Hashwerts mit dem privaten kryptographischen Schlüssel (107) des Inhabers (100) des virtuellen Dokuments (108) vor der Übertragung an das zweite elektronische Gerät (152),
• Überprüfen der Signatur durch das zweite elektronische Gerät (152) nach der Übertragung unter Verwendung des von der kryptographisch gesicherten Datenbank (162) umfassten öffentlichen kryptographischen Schlüssels (109) des Inhabers (100).

4. Verfahren nach Anspruch 3, wobei die Kennung einen öffentlichen Schlüssel (160) eines dem zweiten elektronischen Gerät (152) zugeordneten asymmetrischen Schlüsselpaars umfasst.

5. Verfahren nach einem der vorhergehenden Ansprüche, wobei der in der Datenbank (162) gespeicherte Hashwert des virtuellen Dokuments (108) mit einem privaten Schlüssel (158) eines einem Aussteller des virtuellen Dokuments (108) zugeordneten asymmetrischen Schlüsselpaars signiert ist,
wobei das Verfahren ferner umfasst:
Überprüfen der Signatur des in dem identifizierten Datenbankeintrag gespeicherten Hashwerts durch das zweite elektronische Gerät (152) unter Verwendung eines öffentlichen kryptographischen Schlüssels des dem Aussteller zugeordneten asymmetrischen Schlüsselpaars.

6. Verfahren nach einem der vorhergehenden Ansprüche, wobei das virtuelle Dokument (108) selbst die Speicher-ID (110) umfasst und/oder wobei das virtuelle Dokument (108) in einem geschützten Speicherbereich (106) des ersten Speichers (104) gespeichert ist.

7. Verfahren nach einem der vorhergehenden Ansprüche, wobei das erste elektronische Gerät (102) ein erstes Display (122) und eine erste Digitalkamera (120) umfasst,
wobei das zweite elektronische Gerät (152) ein zweites Display (174) und eine zweite Digitalkamera (172) umfasst,
wobei das Übertragen des verschlüsselten virtuellen Dokuments (108) umfasst:
• Anzeigen des verschlüsselten virtuellen Dokuments (108) auf dem ersten Display (122),
• Aufnehmen des dargestellten verschlüsselten virtuellen Dokuments (108) mit der zweiten Digitalkamera (172).

8. Verfahren nach Anspruch 7, wobei das verschlüsselte virtuelle Dokument (108) auf dem ersten Display (122) als zeitlich kodierter graphischer Code in Form eines Videostreams angezeigt wird.

9. Verfahren nach einem der Ansprüche 7 bis 8, wobei das Übertragen des dem zweiten elektronischen Gerät (152) zugeordneten kryptographischen Schlüssels (160) umfasst:
• Anzeigen des kryptographischen Schlüssels (160) auf dem zweiten Display (174),
• Aufnehmen des dargestellten kryptographischen Schlüssels (160) mit der ersten Digitalkamera (120).

10. Verfahren nach Anspruch 9, wobei der dem zweiten elektronischen Gerät (152) zugeordnete kryptographische Schlüssel (160) auf dem zweiten Display (174) als graphischer Code angezeigt wird.

11. Verfahren nach einem der Ansprüche 2 bis 10, wobei es sich bei dem kryptographischen Schlüssel des zweiten elektronischen Geräts (152) um den öffentlichen Schlüssel (160) des dem zweiten elektronischen Gerät (152) zugeordneten asymmetrischen Schlüsselpaars handelt und wobei das Entschlüsseln des verschlüsselten virtuellen Dokuments (108) unter Verwendung eines privaten Schlüssels (158) des asymmetrischen Schlüsselpaars erfolgt, welcher in einem geschützten Speicherbereich (156) des zweiten Speichers (154) gespeichert ist, und/oder wobei es sich bei dem kryptographischen Schlüssel des zweiten elektronischen Geräts (152) um einen symmetrischen kryptographischen Schlüssel handelt.

12. Verfahren nach einem der vorhergehenden Ansprüche, wobei es sich bei dem ersten und/oder zweiten elektronischen Gerät (102, 352) um ein Mobilfunkgerät, insbesondere ein Smartphone, handelt und/oder wobei sich zumindest das zweite elektronische Gerät (152) in einem Offline-Modus befindet und/oder wobei das virtuelle Dokument (108) ein Ablaufdatum umfasst, welches ein Ende der Gültigkeit des virtuellen Dokuments (108) festlegt und/oder wobei das virtuelle Dokument (108) nach der Offline-Echtheitsprüfung automatisch von dem zweiten elektronischen Gerät (152) gelöscht wird.

13. Verfahren nach einem der Ansprüche 1 bis 12, wobei das Verfahrens ferner ein Ausstellen des virtuellen Dokuments (108, 364) als einer virtuellen Version eines Dokuments (360) durch ein Computersystem (300) eines ID-Providers zur Offline-Echtheitsprüfung des virtuellen Dokuments (108) umfasst, wobei das Dokument (360) eine visuelle Widergabe eines Datensatzes aufweist,
wobei das Ausstellen umfasst:
• Erstellen des virtuellen Dokuments (108, 364) als virtueller Version des Dokuments (360), welches eine elektronische Kopie des Datensatzes des Dokuments (360) umfasst,
• Berechnen eines Hashwerts des virtuellen Dokuments (108, 364),
• Signieren des Hashwerts mit einem privaten Schlüssel (306) eines dem Austeller des virtuellen Dokuments (108, 364) zugeordneten asymmetrischen Schlüsselpaars,
• Speichern des signierten Hashwerts in einem Eintrag in einer kryptographisch gesicherten Datenbank (310) zur Ausstellung des virtuellen Dokuments (108, 364),
• Senden des virtuellen Dokuments (108, 364) an einen Besitzer (350) des Dokuments zusammen mit einer Speicher-ID (310) des virtuellen Dokuments (108, 364), wobei die Speicher-ID den Eintrag der Datenbank (310) mit dem als authentisch hinterlegten signierten Hashwert des virtuellen Dokuments (108, 364) identifiziert.

14. System zur Offline-Echtheitsprüfung eines virtuellen Dokuments (108, 364), wobei das System ein erstes und ein zweites elektronisches Gerät (102, 152) umfasst,
wobei das erste elektronische Gerät (102) einen ersten Speicher (104) umfasst, in welchem das virtuelle Dokument (108, 364) und eine Speicher-ID (110) des virtuellen Dokuments (108, 364) gespeichert sind,
wobei das zweite elektronische Gerät (152) einen zweiten Speicher (154) umfasst, in welchem eine kryptographisch gesicherte Datenbank (162) gespeichert ist, welche als authentisch hinterlegte Hashwerte von einer Mehrzahl von virtuellen Dokumenten umfasst, wobei die Speicher-ID (110) des virtuellen Dokuments (108, 364) einen Eintrag der Datenbank (162) mit dem Hashwert des virtuellen Dokuments (108, 364) identifiziert,
wobei das System dazu konfiguriert ist ein Verfahren nach einem den Ansprüche 1 bis 12 auszuführen.

15. System nach Anspruch 14, welches ferner ein Computersystem umfasst, das zum Ausstellen des virtuellen Dokuments (108, 364) als einer virtuellen Version eines Dokuments (360) nach Anspruch 13 konfiguriert ist.

## Claims

1. A method for offline authenticity testing of a virtual document (108) by means of a first and a second electronic device (102, 152),
wherein the first electronic device (102) comprises a first memory (104), in which the virtual document (108) and a memory ID (110) of the virtual document (108) are stored, and wherein the memory ID (110) is encrypted together with the virtual document (108) by the first device (102) using a cryptographic key of the second device (152),
wherein the second electronic device (152) comprises a second memory (154) in which there is stored a cryptographically secured database (162), which comprises hash values of a plurality of virtual documents as authentically stored hash values, wherein the memory ID (110) of the virtual document (108) identifies an entry of the database (162) with the hash value of the virtual document (108), wherein the cryptographically secured database is a blockchain (162) and the hash value of the virtual document is stored as a transaction in a block of the blockchain (162), and wherein the second electronic device (152) does not require an online connection to a remote central server system to test the authenticity of the virtual document (108),
wherein the method comprises:
• transmitting the virtual document (108) together with the memory ID (110) from the first electronic device (102) to the second electronic device (152),
• calculating a hash value of the virtual document (108) by the second electronic device (152),
• identifying the database entry with the hash value of the virtual document (108) by the second electronic device (152) with use of the memory ID (110) of the virtual document (108),
• comparing the calculated hash value with the hash value of the virtual document (108) stored in the identified database entry, wherein the authenticity of the virtual document (108) is confirmed if both hash values match.

2. The method according to claim 1, wherein the virtual document (108) is transmitted from the first electronic device (102) to the second electronic device (152) in encrypted form and the method further comprises:
• transmitting the cryptographic key (160) of the second electronic device (152) from the second electronic device (152) to the first electronic device (102),
• encrypting the virtual document (108) by the first device (102) with the cryptographic key (160) of the second device (152) before the document is transmitted to the second electronic device (152),
• decrypting the encrypted virtual document (108) by the second electronic device (152) after the document has been transmitted.

3. The method according to either one of the preceding claims, wherein the transmission of the virtual document (108) from the first electronic device (102) to the second electronic device (152) also comprises a signing with a private cryptographic key (107) of an asymmetric key pair assigned to the owner (100) of the virtual document (108), wherein the cryptographically secured database (162) comprises a public cryptographic key (109) of the asymmetric key pair assigned to the owner (100), wherein the method further comprises:
• calculating a hash value from the virtual document (108) and an identifier which identifies the transmission of the virtual document (108) from the first electronic device (102) to the second electronic device (152),
• signing the hash value with the private cryptographic key (107) of the owner (100) of the virtual document (108) before the document is transmitted to the second electronic device (152),
• checking the signature by the second electronic device (152) with use of the public cryptographic key (109) of the owner (100) comprised by the cryptographically secured database (162), after the document has been transmitted.

4. The method according to claim 3, wherein the identifier comprises a public key (160) of an asymmetric key pair assigned to the second electronic device (152).

5. The method according to any one of the preceding claims, wherein the hash value of the virtual document (108) stored in the database (162) is signed with a private key (158) of an asymmetric key pair assigned to the issuer of the virtual document (108),
wherein the method further comprises:
checking the signature of the hash value stored in the identified database entry by the second electronic device (152) with use of a public cryptographic key of the asymmetric key pair assigned to the issuer.

6. The method according to any one of the preceding claims, wherein the virtual document (108) itself comprises the memory ID (110), and/or wherein the virtual document (108) is stored in a protected memory region (106) of the first memory (104).

7. The method according to one of the preceding claims, wherein the first electronic device (102) comprises a first display (122) and a first digital camera (120),
wherein the second electronic device (152) comprises a second display (174) and a second digital camera (172),
wherein the transmission of the decrypted virtual document (108) comprises:
• displaying the encrypted virtual document (108) on the first display (122),
• capturing the displayed encrypted virtual document (108) using the second digital camera (172).

8. The method according to claim 7, wherein the encrypted virtual document (108) is displayed on the first display (122) as a time-coded graphical code in the form of a video stream.

9. The method according to either one of claims 7 to 8, wherein the transmission of the cryptographic key (160) assigned to the second electronic device (152) comprises:
• displaying the cryptographic key (160) on the second display (174),
• capturing the displayed cryptographic key (160) using the first digital camera (120).

10. The method according to claim 9, wherein the cryptographic key (160) assigned to the second electronic device (152) is displayed on the second display (174) in the form of graphic code.

11. The method according to any one of claims 2 to 10, wherein the cryptographic key of the second electronic device (152) is the public key (160) of the asymmetric key pair assigned to the second electronic device (152), and wherein the encrypted virtual document (108) is decrypted using a private key (158) of the asymmetric key pair which is stored in a protected memory region (156) of the second memory (154), and/or wherein the cryptographic key of the second electronic device (152) is a symmetric cryptographic key.

12. The method according to one of the preceding claims, wherein the first and/or second electronic device (102, 352) is a mobile radio unit, in particular a smartphone, and/or wherein at least the second electronic device (152) is in an offline mode, and/or wherein the virtual document (108) is an expiry date which defines an end of the validity of the virtual document (108), and/or wherein the virtual document (108) is automatically deleted from the second electronic device (152) after the offline authenticity test.

13. The method according to any one of claims 1 to 12, wherein the method further comprises issuing the virtual document (108, 364) as a virtual version of a document (360) by a computer system (300) of an ID provider for offline authenticity testing of the virtual document (108), wherein the document (360) includes a visual reproduction of a dataset,
wherein the issuing process comprises:
• creating the virtual document (108, 364) as a virtual version of the document (360) which comprises an electronic copy of the dataset of the document (360),
• calculating a hash value of the virtual document (108, 364),
• signing the hash value with a private key (306) of an asymmetric key pair assigned to the issuer of the virtual document (108, 364),
• storing the signed hash value in an entry in a cryptographically stored database (310) for issuing the virtual document (108, 364),
• sending the virtual document (108, 364) to an owner (350) of the document together with a memory ID (310) of the virtual document (108, 364), wherein the memory ID identifies the entry of the database (310) with the signed hash value of the virtual document (108, 364) considered to be an authentically stored hash value.

14. A system for offline authenticity testing of a virtual document (108, 364), wherein the system comprises a first and a second electronic device (102, 152),
wherein the first electronic device (102) comprises a first memory (104), in which the virtual document (108, 364) and a memory ID (110) of the virtual document (108, 364) are stored,
wherein the second electronic device (152) comprises a second memory (154), in which there is stored a cryptographically secured database (162), which comprises hash values of a plurality of virtual documents as authentically stored hash values, wherein the memory ID (110) of the virtual document (108, 364) identifies an entry of the database (162) with the hash value of the virtual document (108, 364),
wherein the system is configured to carry out a method according to any one of claims 1 to 12.

15. The system according to claim 14, which further comprises a computer system which is configured to issue the virtual document (108, 364) as a virtual version of a document (360) according to claim 13.

## Revendications

1. Procédé de vérification hors ligne de l'authenticité d'un document virtuel (108) au moyen d'un premier et d'un deuxième appareil électronique (102, 152),
dans lequel le premier appareil (102) électronique comprend une première mémoire (104), dans laquelle sont enregistrés le document virtuel (108) et un ID de mémoire (110) du document virtuel (108), et dans lequel l'ID de mémoire (110) est chiffré conjointement avec le document virtuel (108) par le premier appareil (102) avec une clé cryptographique du deuxième appareil (152),
dans lequel le deuxième appareil (152) électronique comprend une deuxième mémoire (154), dans laquelle est enregistrée une banque de données (162) sécurisée cryptographiquement, laquelle comprend une multiplicité de documents virtuels sous forme de valeurs de hachage déposées comme étant authentiques, dans lequel l'ID de mémoire (110) du document virtuel (108) identifie une entrée de la banque de données (162) avec une valeur de hachage du document virtuel (108), dans lequel, dans le cas de la banque données sécurisée cryptographiquement, il s'agit d'une chaine de blocs (162) et la valeur de hachage du document virtuel est enregistrée sous forme d'une transaction dans un bloc de la chaine de blocs (162), et dans lequel le deuxième appareil (152) électronique ne nécessite pas de connexion en ligne vers un système de serveurs central à distance pour la vérification de l'authenticité du document virtuel (108),
le procédé comprenant :
• la transmission du document virtuel (108) conjointement avec l'ID de mémoire (110) du premier appareil (102) électronique vers le deuxième appareil (152) électronique,
• le calcul d'une valeur de hachage du document virtuel (108) par le deuxième appareil (152) électronique,
• l'identification de l'entrée de la banque de données avec la valeur de hachage du document virtuel (108) par le deuxième appareil (152) électronique moyennant l'emploi de l'ID de mémoire (110) du document virtuel (108),
• la comparaison de la valeur de hachage calculée avec la valeur de hachage du document virtuel (108) enregistrée dans l'entrée de banque de données identifiée, dans lequel l'authenticité du document virtuel (108) est confirmée dans le cas où les deux valeurs de hachage concordent.

2. Procédé selon la revendication 1, dans lequel la transmission du document virtuel (108) a lieu sous forme chiffrée du premier appareil (102) électronique vers le deuxième appareil (152) électronique, et le procédé comprend en outre :
• la transmission de la clé cryptographique (160) du deuxième appareil -152) électronique à partir du deuxième appareil (152) électronique vers le premier appareil (102) électronique,
• le chiffrement du document virtuel (108) par le premier appareil (102) avec la clé cryptographique (160) du deuxième appareil (152) avant la transmission vers le deuxième appareil (152) électronique,
• le déchiffrement du document virtuel (108) chiffré par le deuxième appareil (152) électronique après la transmission.

3. Procédé selon l'une des revendications précédentes, dans lequel la transmission du document virtuel (108) du premier appareil (102) électronique vers le deuxième appareil (152) électronique comprend en outre une signature avec une clé cryptographique privée (107) d'une paire de clés asymétrique associée à un propriétaire (100) du document virtuel (108), dans lequel la banque de données (162) sécurisée cryptographiquement comprend une clé cryptographique publique (109) de la paire de clés asymétrique associée au propriétaire (100), où le procédé comprend en outre :
• le calcul d'une valeur de hachage à partir du document virtuel (108) et d'un identifiant, lequel identifie la transmission du document virtuel (108) du premier appareil (102) électronique vers le deuxième appareil (152) électronique,
• la signature de la valeur de hachage avec la clé cryptographique privée (107) du propriétaire (100) du document virtuel (108) avant la transmission vers le deuxième appareil (152) électronique,
• la vérification de la signature par le deuxième appareil (152) électronique après la transmission, moyennant l'emploi de la clé cryptographique publique (109) du propriétaire (100) comprise par la banque de données (162) sécurisée cryptographiquement.

4. Procédé selon la revendication 3, dans lequel l'identifiant comprend une clé publique (160) d'une paire de clés asymétrique associée au deuxième appareil (152) électronique.

5. Procédé selon l'une des revendications précédentes, dans lequel la valeur de hachage du document virtuel (108) enregistrée dans la banque de données (162) est signée avec une clé privée (158) d'une paire de clés asymétrique associée à un éditeur du document virtuel (108),
le procédé comprenant en outre :
la vérification de la signature de la valeur de hachage enregistrée dans l'entrée de banque de données identifiée par le deuxième appareil (152) électronique moyennant l'emploi d'une clé cryptographique publique de la paire de clés asymétrique associée à l'éditeur.

6. Procédé selon l'une des revendications précédentes, dans lequel le document virtuel (108) comprend lui-même l'ID de mémoire (110) et/ou dans lequel le document virtuel (108) est enregistré dans une zone de mémoire (106) sécurisée de la première mémoire (104).

7. Procédé selon l'une des revendications précédentes, dans lequel le premier appareil (102) électronique comprend un premier affichage (122) et une première caméra numérique (120),
dans lequel le deuxième appareil (152) électronique comprend un deuxième affichage (174) et une deuxième caméra numérique (172),
dans lequel la transmission du document virtuel (108) chiffré comprend :
• l'affichage du document virtuel (108) chiffré sur le premier affichage (122),
• la prise de vue du document virtuel (108) chiffré représenté avec une deuxième caméra numérique (172).

8. Procédé selon la revendication 7, dans lequel le document virtuel (108) chiffré est indiqué sur le premier affichage (122) en tant que code graphique codé périodiquement sous la forme d'un flux vidéo.

9. Procédé selon l'une des revendications 7 à 8, dans lequel la transmission de la clé cryptographique (160) associée au deuxième appareil (152) électronique comprend :
• l'affichage de la clé cryptographique (160) sur le deuxième affichage (174),
• la prise de vue de la clé cryptographique (160) représentée avec la première caméra numérique (120).

10. Procédé selon la revendication 9, dans lequel la clé cryptographique (160) associée au deuxième appareil (152) électronique est indiquée sous forme de code graphique sur le deuxième affichage (174).

11. Procédé selon l'une des revendications 2 à 10, dans lequel, dans le cas de la clé cryptographique du deuxième appareil (152) électronique, il s'agit de la clé publique (160) de la paire de clés asymétrique associée au deuxième appareil (152) électronique et dans lequel le déchiffrement du document virtuel (108) chiffré a lieu moyennant l'emploi d'une clé privée (158) de la paire de clés asymétrique, laquelle est enregistrée dans une zone de mémoire (156) sécurisée de la deuxième mémoire (154), et/ou dans lequel il s'agit d'une clé cryptographique symétrique dans le cas de la clé cryptographique du deuxième appareil (152) électronique.

12. Procédé selon l'une des revendications précédentes, dans lequel, dans le cas du premier et/ou du deuxième appareil (102, 352) électronique, d'un appareil radio mobile, en particulier d'un Smartphone, et/ou dans lequel au moins le deuxième appareil (152) électronique se trouve dans un mode hors ligne, et/ou dans lequel le document virtuel (108) comprend un échéancier, lequel fixe une fin de validité du document virtuel (108), et/ou dans lequel le document virtuel (108) est automatiquement effacé du deuxième appareil (152) électronique après la vérification d'authenticité hors ligne.

13. Procédé selon l'une des revendications 1 à 12, le procédé comprenant en outre une édition du document virtuel (108, 364) sous forme d'une version virtuelle d'un document (360) par un système informatique (300) d'un fournisseur d'ID pour la vérification de l'authenticité hors ligne du document virtuel (108), dans lequel le document (360) présente une reproduction visuelle d'un ensemble de données,
dans lequel l'édition comprend :
• l'établissement du document virtuel (108, 364) sous forme de version virtuelle du document (360), laquelle comprend une copie électronique de l'ensemble de données du document (360),
• le calcul d'une valeur de hachage du document virtuel (108, 364),
• la signature de la valeur de hachage avec une clé privée (306) d'une paire de clés asymétrique associée à l'éditeur du document virtuel (108, 364),
• l'enregistrement de la valeur de hachage signée dans une entrée dans une banque de données (310) sécurisée cryptographiquement pour l'édition du document virtuel (108, 364),
• l'envoi du document virtuel (108, 364) à un propriétaire (350) du document conjointement avec un ID de mémoire (310) du document virtuel (108, 364), dans lequel l'ID de mémoire identifie l'entrée de la banque de données (310) avec le document virtuel (108, 364) sous la forme de la valeur de hachage signée consignée comme authentique.

14. Système de vérification d'authenticité hors ligne d'un document virtuel (108, 364), le système comprenant un premier et un deuxième appareil (102, 152) électronique,
dans lequel le premier appareil (102) électronique comprend une première mémoire (104), dans laquelle sont enregistrés le document virtuel (108, 364) et un ID de mémoire (110) du document virtuel (108, 364),
dans lequel le deuxième appareil (152) électronique comprend une deuxième mémoire (154), dans laquelle est enregistrée une banque de données (162) sécurisée cryptographiquement, laquelle comprend une multiplicité de documents virtuels sous forme de valeurs de hachage déposées comme étant authentiques, dans lequel l'ID de mémoire (110) du document virtuel (108, 364) identifie une entrée de la banque de données (162) avec une valeur de hachage du document virtuel (108, 364),
le système étant configuré pour exécuter un procédé selon l'une des revendications 1 à 12.

15. Système selon la revendication 14, lequel comprend en outre un système informatique qui est configuré pour l'édition du document virtuel (108, 364) sous forme d'une version virtuelle d'un document (360) selon la revendication 13.
